(19) **Europäisches Patentamt**
**European Patent Office**
**Office européen des brevets**

(11) **EP 2 383 161 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**08.03.2017 Patentblatt 2017/10**

(51) Int Cl.:
**B61D 17/02** (2006.01)

(45) Hinweis auf die Patenterteilung:
**25.12.2013 Patentblatt 2013/52**

(21) Anmeldenummer: **10168073.4**

(22) Anmeldetag: **01.07.2010**

(54) **Fahrzeugkopf mit reduzierter Seitenwindempfindlichkeit**

Vehicle front end with reduced sensitivity to side winds

Tête de véhicule dotée d'une sensibilité au vent latéral réduite

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.04.2010 EP 10161538**

(43) Veröffentlichungstag der Anmeldung:
**02.11.2011 Patentblatt 2011/44**

(73) Patentinhaber: **Bombardier Transportation GmbH 10785 Berlin (DE)**

(72) Erfinder:
• **Schober, Martin**
**14089 Berlin (DE)**
• **Orellano, Alexander**
**13629 Berlin (DE)**
• **Tietze, Andreas**
**13595 Berlin (DE)**
• **Weise, Marco**
**12683 Berlin (DE)**
• **Steilen, Stefan**
**13088 Berlin (DE)**

(74) Vertreter: **Cohausz & Florack
Patent- & Rechtsanwälte
Partnerschaftsgesellschaft mbB
Bleichstraße 14
40211 Düsseldorf (DE)**

(56) Entgegenhaltungen:
EP-A1- 0 008 147          EP-A1- 0 008 147
DE-A1- 2 554 488          DE-A1- 2 554 488
DE-A1- 19 600 038          DE-A1- 19 600 038

• Fachartikel efSET® - Innovative High-speed Rolling stock for overseas markets, KAWASAKI Technical Review Heft 170, Februar 2010, Original in Japanisch
• 'efSET - Innovative high-speed rolling stock for overseas markets' KAWASAKI TECHNICAL REVIEW Nr. 170, September 2010, Seiten 13 - 20
• Akzessionierungsbeleg der Technischen Informationsbibliothek und Universitätsbibliotek Hannover (TIB/UB) zur D1 vom 16.09.2014
• Vergrößerte Darstellung von Figur 3 der D1
• Internetveröffentlichung "Italian regional diesel convoy Alstom Al502" Minuetto"at Santhia (TO), Italy, vom 11.04.2006, Seite zuletzt geändert am 29.09.2009
• Firmenschrift Dieselhydraulischer Triebwagen "Minuetto" mit RailPack, Voith, 04/2008
• Fachartikel Spanien: zwei neue Hochgeschwindigkeitsstrecken, Eisenbahn-Revue 01/2008

EP 2 383 161 B2

**Beschreibung**

Die vorliegende Erfindung betrifft ein Fahrzeug, insbesondere ein Schienenfahrzeug für den Hochgeschwindigkeitsverkehr, mit einem Wagenkasten, der auf wenigstens einem Fahrwerk abgestützt ist, wobei der Wagenkasten eine Fahrzeuglängsrichtung, eine Fahrzeugquerrichtung und eine Fahrzeughöhenrichtung definiert, wobei der Wagenkasten einen Rumpfabschnitt und einen daran anschließenden Kopfabschnitt aufweist. Der Kopfabschnitt ist dazu ausgebildet, im Betrieb ein freies Fahrzeugende zu bilden, wobei sich der Kopfabschnitt entlang der Fahrzeuglängsrichtung zum freien Fahrzeugende hin zumindest in der Fahrzeughöhenrichtung verjüngt. Der Kopfabschnitt weist weiterhin eine Außenhaut und eine sich in der Fahrzeuglängsrichtung und/oder der Fahrzeughöhenrichtung erstreckende Strömungsabrisseinrichtung zur Verringerung der Seitenwindempfindlichkeit des Fahrzeugs auf.

Bei modernen Schienenfahrzeugen mit vergleichsweise hohen Nennbetriebsgeschwindigkeiten und/oder vergleichsweise hoch aufragender Gestaltung (wie sie beispielsweise bei Doppelstockfahrzeugen erforderlich ist) besteht häufig das Problem, dass sie eine erhöhte so genannte Seitenwindempfindlichkeit aufweisen. Bei diesen Fahrzeugen kommt es bei einer beispielsweise durch Seitenwind bedingten schrägen Anströmung des Wagenkastens (also einer Anströmung, die von einer zur Fahrtrichtung bzw. Fahrzeuglängsachse parallelen Anströmung abweicht) mit zunehmender Anströmgeschwindigkeit und/oder zunehmender Abweichung von der fahrtrichtungsparallelen Anströmung unter anderem zu einer ungünstigen Druckverteilung an der vorlaufenden Fahrzeugspitze. Diese ungünstige Druckverteilung bewirkt unter anderem einen Auftrieb und gegebenenfalls ein Rollmoment im Bereich der Fahrzeugspitze, welche gegebenenfalls zu einer erheblichen Radentlastung an dem der Fahrzeugspitze benachbarten Fahrwerk führen können.

Die Radentlastung bei Seitenwind kann dabei so groß ausfallen, dass beispielsweise durch nationale oder internationale Normen bzw. Betriebsvorschriften vorgegebene Seitenwindstabilitätskriterien nicht mehr erfüllt sind. So definiert beispielsweise die Sichtlinie 96/48/EG - Interoperabilität des transeuropäischen Hochgeschwindigkeitsbahnsystems, Teilsystem "Fahrzeuge"(häufig auch als TSI RS bezeichnet), für bestimmte Fahrzeuge mit bestimmten Nennbetriebsgeschwindigkeiten als Stabilitätskriterium vor, dass die maximale durchschnittliche Radentlastung des kritischsten Laufwerks 90 % der statischen Radsatzlasten des Laufwerks nicht überschreiten darf (siehe TSI RS, Anhang G.5.4.1).

Insbesondere bei vergleichsweise leichten Endfahrzeugen in einem Zugverbund, insbesondere bei so genannten Steuerwagen, welche keine bzw. nur wenig schwere Betriebsausrüstung (insbesondere Antriebsausrüstung, wie Haupttransformatoren etc.) tragen, kann ein solches Stabilitätskriterium schnell verletzt werden. Dies hat zur Folge, dass entweder das Gewicht eines solchen Fahrzeugs und damit die Radsatzlasten an dem betreffenden Fahrwerk erhöht werden müssen und zusätzlich oder alternativ die Fahrgeschwindigkeit ab einer bestimmten Seitenwindstärke reduziert werden muss. Beides ist natürlich aus wirtschaftlichen Gründen unerwünscht.

Die DE 25 54 488 C3 schlägt in diesem Zusammenhang ein gattungsgemäßes Fahrzeug vor, bei dem am Fahrzeugkopf beweglich gelagerte Strömungsabrisseinrichtungen vorgesehen sind, die beim Auftreten von Seitenwind einen Strömungsabriss erzeugen, welcher der Entwicklung der oben beschriebenen ungünstigen Druckverteilung am Fahrzeugkopf entgegenwirkt. Bei normaler, fahrtrichtungsparalleler Anströmung sollen diese Strömungsabrisseinrichtungen deaktiviert sein und sich nahtlos in die glatte, gerundete Außenhaut des Wagenkastens einfügen, um nachteilige Effekte dieser Strömungsabrisseinrichtungen hinsichtlich der Geräuschentwicklung des Fahrzeugs (insbesondere bei hohen Geschwindigkeiten) sowie hinsichtlich des Strömungswiderstandes des Fahrzeugs zu vermeiden.

Diese Gestaltung ermöglicht es zwar, die negativen Effekte einer schrägen Anströmung bei Seitenwind zu reduzieren. Sie weist jedoch den Nachteil auf, dass sie vergleichsweise aufwändig und wartungsintensiv ist.

Der vorliegenden Erfindung liegt daher die Aufgabe zu Grunde, ein Fahrzeug der eingangs genannten Art zur Verfügung zu stellen, welches die oben genannten Nachteile nicht oder zumindest in geringerem Maße mit sich bringt und insbesondere auf einfache Weise eine Erhöhung der Seitenwindstabilität des Fahrzeugs ermöglicht.

Die vorliegende Erfindung löst diese Aufgabe ausgehend von einem Fahrzeug gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man auf einfache Weise die Seitenwindstabilität des Fahrzeugs erhöhen kann, ohne die Geräuschentwicklung bei hohen Geschwindigkeiten sowie den Störungswiderstand des Fahrzeugs erheblich zu erhöhen, wenn am Fahrzeugkopf ein in die Außenhaut des Fahrzeugs integrierter, im Wesentlichen starrer dachartiger Vorsprung vorgesehen ist, der bei schräger Anströmung des Fahrzeugs leeseitig der Fahrzeuglängsmittenebene angeordnet ist und dort mit seinem Firstabschnitt eine Strömungsabrisskante für die Luftströmung bildet, sodass sich die Strömung an dieser Stelle von der Außenhaut ablöst.

Der dachartige Vorsprung ist bevorzugt derart ausgeprägt gestaltet, dass vorzugsweise bei sämtlichen im Normalbetrieb des Fahrzeugs erreichbaren Fahrgeschwindigkeiten und entsprechend starkem Seitenwind eine zuverlässige, dauerhafte Ablösung der Strömung von der Außenhaut gewährleistet ist, mithin also ein Wiederanlegen der Strömung an die Außenhaut zuverlässig verhindert wird.

Hiermit ist eine vorteilhafte Reduzierung der Seitenwindempfindlichkeit des Fahrzeugs möglich. Dabei hat es sich zudem gezeigt, dass der dachartige Vorsprung derart gestaltet und angeordnet werden kann, dass es auch bei hohen Fahrgeschwindigkeiten zu keiner nennenswerten Erhöhung der Geräuschentwicklung an der Strömungsabrisskante sowie ebenfalls zu keiner nennenswerten Erhöhung des Strömungswiderstands des Fahrzeugs kommt. Ein derartiger dachartiger Vorsprung kann zudem ohne größeren Aufwand in die Außenhaut des Wagenkastens, beispielsweise seitlich außerhalb einer Frontscheibe, integriert werden, sodass sich der Fertigungsaufwand für das Fahrzeug nicht nennenswert erhöht.

Gemäß einem Aspekt betrifft die vorliegende Erfindung daher ein Fahrzeug, insbesondere ein Schienenfahrzeug für den Hochgeschwindigkeitsverkehr, mit einem Wagenkasten, der auf wenigstens einem Fahrwerk abgestützt ist, wobei der Wagenkasten eine Fahrzeuglängsrichtung, eine Fahrzeugquerrichtung und eine Fahrzeughöhenrichtung definiert. Der Wagenkasten weist einen Rumpfabschnitt und einen daran anschließenden Kopfabschnitt auf. Der Kopfabschnitt ist dazu ausgebildet, im Betrieb ein freies Fahrzeugende zu bilden, wobei sich der Kopfabschnitt entlang der Fahrzeuglängsrichtung zum freien Fahrzeugende hin zumindest in der Fahrzeughöhenrichtung verjüngt. Der Kopfabschnitt weist zudem eine Außenhaut und eine sich in der Fahrzeuglängsrichtung und/oder der Fahrzeughöhenrichtung erstreckende Strömungsabrisseinrichtung zur Verringerung der Seitenwindempfindlichkeit des Fahrzeugs auf. Die Strömungsabrisseinrichtung umfasst einen durch die Außenhaut gebildeten dachartigen Vorsprung, wobei der dachartige Vorsprung in der Fahrzeugquerrichtung von einer Fahrzeuglängsmittenebene beabstandet ist. Der dachartige Vorsprung weist einen der Fahrzeuglängsmittenebene zugewandten ersten Dachabschnitt, einen der Fahrzeuglängsmittenebene abgewandten zweiten Dachabschnitt und einen Firstabschnitt auf, der einen Übergang zwischen dem ersten Dachabschnitt und dem zweiten Dachabschnitt bildet. Der erste Dachabschnitt und der zweite Dachabschnitt verlaufen derart zueinander geneigt, dass der Firstabschnitt bei einer Nennbetriebsgeschwindigkeit des Schienenfahrzeugs und einer, insbesondere seitenwindbedingten, schrägen Anströmung des dachartigen Vorsprungs durch einen Luftstrom von der Fahrzeuglängsmittenebene her eine Strömungsabrisskante für den Luftstrom bildet.

Es sei an dieser Stelle angemerkt, dass unter der Nennbetriebsgeschwindigkeit im Sinne der vorliegenden Erfindung die für die Auslegung und Zulassung des Fahrzeugs relevante maximale Geschwindigkeit des Fahrzeugs verstanden werden soll, welche im Normalbetrieb des Fahrzeugs über einen längeren Zeitraum aufrechterhalten werden kann bzw. aufrechterhalten wird.

Die Dachabschnitte und der Firstabschnitt des dachartigen Vorsprungs können grundsätzlich in beliebiger geeigneter Weise gestaltet sein, solange sichergestellt ist, dass im Bereich des Firstabschnitts eine Strömungsabrisskante gebildet ist, die eine zuverlässige und dauerhafte Ablösung der Luftströmung bei schräger Anströmung des Fahrzeugs bzw. des Wagenkastens gewährleistet. Insbesondere können sowohl der erste Dachabschnitt als auch der zweite Dachabschnitt (in einer Schnittebene senkrecht zur Fahrzeuglängsrichtung) zumindest abschnittsweise eine geradlinige und/oder zumindest abschnittsweise eine beliebig gekrümmte Schnittkontur aufweisen. Hierbei ist es lediglich erforderlich, dass der erste Dachabschnitt und der zweite Dachabschnitt derart zueinander angeordnet sind, dass der Luftströmung bei schräger Anströmung des Fahrzeugs durch den ersten Dachabschnitt im grenzschichtnahen Bereich eine Hauptströmungsrichtung aufgeprägt wird, wobei die Schnittkontur im Bereich des zweiten Dachabschnitts (in der Hauptströmungsrichtung nach dem Firstabschnitt) derart scharf bzw. kliffartig bezüglich der Hauptströmungsrichtung abknickt bzw. abfällt, dass die Luftströmung nicht in der Lage ist, dieser rapiden Richtungsänderung der Schnittkontur zu folgen, und sich demgemäß dauerhaft von der Außenhaut ablöst.

Diese rapide Richtungsänderung der Schnittkontur entlang der Hauptströmungsrichtung im grenzschichtnahen Bereich kann auf beliebige geeignete Weise durch eine entsprechende Gestaltung der Außenhaut des Wagenkastens erzielt werden. Hierbei in ist anzumerken, dass die Außenhaut des Wagenkastens insbesondere nicht notwendigerweise in jedem Punkt exakt der Hauptströmungsrichtung folgen muss. Vielmehr sind lokale Abweichungen der Schnittkontur der Außenhaut von dieser Hauptströmungsrichtung möglich (die beispielsweise durch Unregelmäßigkeiten der Außenhaut in Form von lokalen Rippen, Kanten oder Dellen etc. bedingt sind), in deren Bereich die Grenzschicht sowie gegebenenfalls der grenzschichtnahe Bereich der Strömung eine von der Hauptströmungsrichtung abweichende Richtung aufweist. Es muss lediglich gewährleistet sein, dass diese lokalen Abweichungen keine Auswirkung auf die globale Strömungsrichtung der Strömung (mithin also die Hauptströmungsrichtung) im grenzschichtnahen Bereich haben.

Bei dem erfindungsgemäßen Fahrzeug ist der erste Dachabschnitt derart ausgebildet, dass er in einer senkrecht zur Fahrzeuglängsrichtung verlaufenden Fahrzeugquerebene dem Luftstrom bei einer Anströmung in der Fahrzeugquerrichtung von der Fahrzeuglängsmittenebene her in einem ersten Anschlussbereich zu dem Firstabschnitt eine erste Tangentialrichtung aufprägt, während der zweite Dachabschnitt derart ausgebildet ist, dass er in der Fahrzeugquerebene dem Luftstrom bei einer Anströmung in der Fahrzeugquerrichtung zu der Fahrzeuglängsmittenebene hin in einem zweiten Anschlussbereich zu dem Firstabschnitt eine zweite Tangentialrichtung aufprägt. Die erste Tangentialrichtung und die zweite Tangentialrichtung definieren dabei einen (zwischen den beiden Dachabschnitten eingeschlossenen) Dachwinkel des dachartigen Vorsprungs. Um die beschriebene rapide Richtungsänderung der Schnittkontur und damit die gewünschte dauerhafte Ablösung der Strömung zu erzielen, beträgt der Dachwinkel über einen sich in der Fahrzeuglängsrichtung erstreckenden ersten Kantenbereich weniger als 120°. Vorzugsweise beträgt der Dachwinkel weniger als 110°, weiter vorzugsweise weniger als 100° beträgt. Besonders günstige Ergebnisse lassen sich erzielen, wenn der Dachwinkel 70° bis 110° beträgt.

Es sei nochmals erwähnt, dass die Außenhaut des Wagenkastens in dem jeweiligen Anschlussbereich nicht notwendigerweise eine glatte, beispielsweise gleichmäßig gekrümmte, Kontur aufweisen muss. Vielmehr sind hier lokale Abweichungen (wie lokale Rippen, Kanten, Dellen etc) möglich, solange der jeweiligen Strömung im grenzschichtnahen Bereich die jeweilige Tangentialrichtung als Hauptströmungsrichtung aufgeprägt wird.

Bei dem erfindungsgemäßen Fahrzeug, insbesondere bei Varianten mit im Wesentlichen glatter Außenhaut (die beispielsweise im Anschlussbereich an den Firstabschnitt jeweils eine höchstens moderate Änderung der Krümmung aufweist), definiert der erste Dachabschnitt in einer senkrecht zur Fahrzeuglängsrichtung verlaufenden Fahrzeugquerebene in einem ersten Anschlussbereich zu dem Firstabschnitt eine erste Tangentialrichtung, während der zweite Dachabschnitt in der Fahrzeugquerebene in einem zweiten Anschlussbereich zu dem Firstabschnitt eine zweite Tangentialrichtung definiert, wobei die erste Tangentialrichtung und die zweite Tangentialrichtung wiederum einen (zwischen den beiden Dachabschnitten eingeschlossenen) Dachwinkel des dachartigen Vorsprungs definieren. Um auch hier die beschriebene rapide Richtungsänderung der Schnittkontur und damit die gewünschte dauerhafte Ablösung der Strömung zu erzielen, beträgt der Dachwinkel über einen sich in der Fahrzeuglängsrichtung erstreckenden ersten Kantenbereich weniger als 120°. Bevorzugt beträgt der Dachwinkel weniger als 110°, weiter vorzugsweise weniger als 100°. Besonders günstige Ergebnisse lassen sich erzielen, wenn der Dachwinkel 70° bis 110° beträgt.

Die Erstreckung des dachartigen Vorsprungs über den Kopfabschnitt kann in den drei Fahrzeugrichtungen grundsätzlich in beliebiger geeigneter Weise gewählt sein, solange die gewünschte Reduktion der Seitenwindempfindlichkeit des Fahrzeugs realisiert wird. So kann es ausreichen, einen vergleichsweise kurzen dachartigen Vorsprung vorzusehen, solange dieser sich über einen für die Seitenwindempfindlichkeit besonders kritischen Bereich des Fahrzeugs erstreckt. Position und Länge (entlang des Firstabschnitts) des dachartigen Vorsprungs können dabei insbesondere von der Nennbetriebsgeschwindigkeit des Fahrzeugs abhängen. So wandert der für die dauerhafte Strömungsablösung sorgende Teil des dachartigen Vorsprungs für unterschiedliche Fahrzeuge mit unterschiedlichen Nennbetriebsgeschwindigkeiten im Allgemeinen mit zunehmender Nennbetriebsgeschwindigkeit des jeweiligen Fahrzeugs in Fahrzeuglängsrichtung von der Fahrzeugspitze weg (der für die dauerhafte Strömungsablösung sorgende Teil des dachartigen Vorsprungs liegt mithin also bei einem Fahrzeug mit einer höheren Nennbetriebsgeschwindigkeit weiter von der Fahrzeugspitze entfernt als bei einem Fahrzeug mit einer niedrigeren Nennbetriebsgeschwindigkeit).

Bei bevorzugten Varianten des erfindungsgemäßen Fahrzeugs weist der Kopfabschnitt in der Fahrzeuglängsrichtung zwischen dem freien Fahrzeugende und einem Anschluss zu dem Rumpfabschnitt eine maximale Kopflänge auf, wobei der Übergang vom Kopfabschnitt zum Rumpfabschnitt in der Regel durch die Stelle in Fahrzeuglängsrichtung definiert ist, an welcher in einem im Wesentlichen über den gesamten Umfang prismatische Bereich des Wagenkastens beginnt, also der Bereich, in dem (abgesehen von Ausnehmungen für Einbauten, wie beispielsweise Stromabnehmern, oder Anbauten, wie beispielsweise Dachcontainern) entlang der Fahrzeuglängsrichtung im Wesentlichen keine Änderung des Querschnitts senkrecht zur Fahrzeuglängsrichtung mehr erfolgt.

Der erste Kantenbereich erstreckt sich in der Fahrzeuglängsrichtung in diesen Fällen über wenigstens 15% der maximalen Kopflänge. Vorzugsweise erstreckt sich der erste Kantenbereich über wenigstens 20% der maximalen Kopflänge. Besonders günstige Ergebnisse im Hinblick auf die Reduktion der Seitenwindempfindlichkeit bei geringer Geräuschemission und geringem Strömungswiderstand in Fahrtrichtung lassen sich erzielen, wenn sich der erste Kantenbereich über 25% bis 50% der maximalen Kopflänge erstreckt.

Zusätzlich oder alternativ ist vorgesehen, dass der erste Kantenbereich ausgehend von dem freien Fahrzeugende in der Fahrzeuglängsrichtung in einem ersten relativen Längsabstand beginnt, der mindestens 2% der maximalen Kopflänge beträgt. Vorzugsweise beträgt der erste relative Längsabstand mindestens 5% der maximalen Kopflänge, weiter vorzugsweise mindestens 15% der maximalen Kopflänge. Auch hier gilt im Allgemeinen, dass der erste relative Längsabstand bevorzugt für unterschiedliche Fahrzeuge mit steigender Nennbetriebsgeschwindigkeit des jeweiligen Schienenfahrzeugs zunimmt (mithin also der erste relative Längsabstand bei einem Fahrzeug mit einer höheren Nennbetriebsgeschwindigkeit größer ist als bei einem Fahrzeug mit einer niedrigeren Nennbetriebsgeschwindigkeit).

Zusätzlich oder alternativ ist weiterhin vorgesehen, dass der erste Kantenbereich ausgehend von dem freien Fahrzeugende in der Fahrzeuglängsrichtung in einem zweiten relativen Längsabstand endet, der höchstens 80% der maximalen Kopflänge beträgt. Vorzugsweise beträgt der zweite relative Längsabstand höchstens 65% der maximalen Kopflänge, weiter vorzugsweise höchstens 50% der maximalen Kopflänge, wobei auch der zweite relative Längsabstand im Allgemeinen für unterschiedliche Fahrzeuge mit steigender Nennbetriebsgeschwindigkeit des Schienenfahrzeugs zunimmt (mithin also der zweite relative Längsabstand bei einem Fahrzeug mit einer höheren Nennbetriebsgeschwindigkeit größer ist als bei einem Fahrzeug mit einer niedrigeren Nennbetriebsgeschwindigkeit).

Hinsichtlich der Lage und Position des dachartigen Vorsprungs in der Höhenrichtung des Fahrzeugs gelten vergleichbare Randbedingungen. So weist der Kopfabschnitt in der Fahrzeughöhenrichtung zwischen einer Fahrzeugunterkante und einer Fahrzeugoberkante eine maximale Kopfhöhe auf, wobei sich der erste Kantenbereich in der Fahrzeughöhenrichtung bevorzugt über wenigstens 10% der maximalen Kopfhöhe erstreckt, vorzugsweise wenigstens 30% der maximalen Kopfhöhe. Besonders günstige Ergebnisse im Hinblick auf die Reduktion der Seitenwindempfindlichkeit bei geringer Geräuschemission und geringem Strömungswiderstand in Fahrtrichtung lassen sich erzielen, wenn sich der erste Kantenbereich in der Fahrzeughöhenrichtung über 25% bis 60% der maximalen Kopfhöhe erstreckt.

Zusätzlich oder alternativ ist vorgesehen, dass der erste Kantenbereich ausgehend von der Fahrzeugunterkante in der Fahrzeughöhenrichtung in einem ersten relativen Höhenabstand beginnt, der mindestens 15% der maximalen Kopfhöhe beträgt. Vorzugsweise beträgt der erste relative Höhenabstand mindestens 20% der maximalen Kopfhöhe, weiter vorzugsweise mindestens 40% der maximalen Kopfhöhe. Auch hier gilt im Allgemeinen, dass der erste relative Höhenabstand für unterschiedliche Fahrzeuge mit steigender Nennbetriebsgeschwindigkeit des Schienenfahrzeugs zunimmt (mithin also der erste relative Höhenabstand bei einem Fahrzeug mit einer höheren Nennbetriebsgeschwindigkeit größer ist als bei einem Fahrzeug mit einer niedrigeren Nennbetriebsgeschwindigkeit).

Zusätzlich oder alternativ ist weiterhin vorgesehen, dass der erste Kantenbereich ausgehend von der Fahrzeugunterkante in der Fahrzeughöhenrichtung in einem zweiten relativen Höhenabstand endet, der höchstens 85% der maximalen Kopfhöhe beträgt. Vorzugsweise beträgt der zweite relative Höhenabstand höchstens 75% der maximalen Kopfhöhe, weiter vorzugsweise höchstens 65% der maximalen Kopflänge. Auch hier gilt im Allgemeinen, dass der zweite relative Höhenabstand für unterschiedliche Fahrzeuge mit steigender Nennbetriebsgeschwindigkeit des Schienenfahrzeugs zunimmt (mithin also der zweite relative Höhenabstand bei einem Fahrzeug mit einer höheren Nennbetriebsgeschwindigkeit größer ist als bei einem Fahrzeug mit einer niedrigeren Nennbetriebsgeschwindigkeit).

Hinsichtlich der Lage und Position des dachartigen Vorsprungs in der Querrichtung des Fahrzeugs gelten ebenfalls vergleichbare Randbedingungen. So weist der Kopfabschnitt in der Fahrzeugquerrichtung eine maximale Kopfbreite auf und der erste Kantenbereich erstreckt sich in der Fahrzeugquerrichtung über wenigstens 10% der maximalen Kopfbreite, vorzugsweise wenigstens 15% der maximalen Kopfbreite. Besonders günstige Ergebnisse im Hinblick auf die Reduktion der Seitenwindempfindlichkeit bei geringer Geräuschemission und geringem Strömungswiderstand in Fahrtrichtung lassen sich erzielen, wenn sich der erste Kantenbereich über 10% bis 20% der maximalen Kopfbreite erstreckt.

Zusätzlich oder alternativ ist vorgesehen, dass der erste Kantenbereich ausgehend von der Fahrzeuglängsmittenebene in der Fahrzeugquerrichtung in einem ersten relativen Querabstand beginnt, der mindestens 15% der maximalen Kopfbreite beträgt. Vorzugsweise beträgt der erste relative Querabstand mindestens 20% der maximalen Kopfbreite, weiter vorzugsweise mindestens 25% der maximalen Kopfbreite. Hier gilt im Allgemeinen, dass der erste relative Querabstand für unterschiedliche Fahrzeuge mit steigender Nennbetriebsgeschwindigkeit des Schienenfahrzeugs abnimmt (mithin also der erste relative Querabstand bei einem Fahrzeug mit einer höheren Nennbetriebsgeschwindigkeit kleiner ist als bei einem Fahrzeug mit einer niedrigeren Nennbetriebsgeschwindigkeit).

Zusätzlich oder alternativ ist vorgesehen, dass der erste Kantenbereich ausgehend von der Fahrzeuglängsmittenebene in der Fahrzeugquerrichtung in einem zweiten relativen Querabstand endet, der höchstens 30% der maximalen Kopfbreite beträgt. Vorzugsweise beträgt der zweite relative Querabstand höchstens 35% der maximalen Kopfbreite, weiter vorzugsweise höchstens 45% der maximalen Kopfbreite. Auch hier gilt im Allgemeinen, dass der zweite relative Querabstand für unterschiedliche Fahrzeuge mit steigender Nennbetriebsgeschwindigkeit des Schienenfahrzeugs abnimmt (mithin also der zweite relative Querabstand bei einem Fahrzeug mit einer höheren Nennbetriebsgeschwindigkeit kleiner ist als bei einem Fahrzeug mit einer niedrigeren Nennbetriebsgeschwindigkeit).

Der Firstabschnitt selbst kann in beliebiger geeigneter Form gestaltet sein, solange sichergestellt ist, dass eine ausreichend schroffe bzw. rapide Richtungsänderung der Außenhaut erfolgt, die ein dauerhaftes Ablösen der Strömung in diesem Bereich bei entsprechendem Seitenwind gewährleistet. Bevorzugt ist vorgesehen, dass der Firstabschnitt in einer senkrecht zur Fahrzeuglängsrichtung verlaufenden Fahrzeugquerebene im Wesentlichen scharfkantig ausgebildet ist, d. h. der Firstabschnitt eine ausgeprägte Kante definiert, welche dieses dauerhafte Ablösen der Strömung bei entsprechendem Seitenwind begünstigt.

Zusätzlich oder alternativ ist bevorzugt vorgesehen, dass der Firstabschnitt in einer senkrecht zur Fahrzeuglängsrichtung verlaufenden Fahrzeugquerebene zumindest abschnittsweise abgerundet ausgebildet ist, wobei der Krümmungsradius des Firstabschnitts vorzugsweise höchstens 30 mm, bevorzugt höchstens 15 mm beträgt. Vorzugsweise beträgt der Krümmungsradius des Firstabschnitts höchstens 5 mm, weiter vorzugsweise höchstens 2 mm, da hiermit strömungstechnisch besonders günstige und dennoch ausreichend einfach zu fertigende Ablösekanten erzielt werden können.

In diesem Zusammenhang ist anzumerken, dass der Krümmungsradius vorzugsweise mit zunehmendem Dachwinkel abnimmt, um eine zuverlässige, saubere Strömungsablösung bei entsprechendem Seitenwind zu erzielen. Mithin ist also bevorzugt eine umso schärfere Kante vorgesehen, je stumpfer der Dachwinkel ist.

Um die beschriebene Scharfkantigkeit des Firstabschnitts zu erzielen, ist dessen Abmessung in Fahrzeugquerrichtung bevorzugt entsprechend begrenzt. Vorzugsweise weist der Firstabschnitt hierzu in einer senkrecht zur Fahrzeuglängsrichtung verlaufenden Fahrzeugquerebene eine maximale Querabmessung auf, die höchstens 30 mm beträgt, vorzugsweise höchstens 15 mm beträgt. Bevorzugt beträgt die maximale Querabmessung höchstens 5 mm, weiter vorzugsweise höchstens 2 mm.

Um ein dauerhaftes Ablösen der Strömung im Bereich des dachartigen Vorsprungs zu erzielen, ist der dachartige Vorsprung bevorzugt derart angeordnet und ausgebildet, dass der Luftströmung in seinem Bereich eine starke radial von der Außenhaut weg gerichtete Strömungskomponente aufgeprägt wird. Mit anderen Worten ist bevorzugt vorgesehen, dass der dachartige Vorsprung derart rampenartig gestaltet ist, dass die Strömung radial von der Außenhaut weg geführt wird. Bevorzugt ist daher vorgesehen, dass in einem senkrecht zur Fahrzeuglängsrichtung verlaufenden Fahrzeugquerschnitt des Wagenkastens eine Verbindungslinie zwischen einem Punkt des Firstabschnitts und dem Flächenschwerpunkt des Fahrzeugquerschnitts eine Radialrichtung definiert, wobei die erste Tangentialrichtung und die Radialrichtung dann einen Winkel von weniger als 60° einschließen. Vorzugsweise beträgt der Winkel zwischen der Radialrichtung und der ersten Tangentialrichtung weniger als 45°, weiter vorzugsweise weniger als 35°.

Bei weiteren bevorzugten Varianten des erfindungsgemäßen Fahrzeugs weist die Außenhaut des Kopfabschnitts auf der Fahrzeugoberseite im Bereich des dachartigen Vorsprungs einen rinnenförmigen Abschnitt auf, der beispielsweise in einfacher Weise die beschriebene, stark radial gerichtete Ableitung der Strömung bewirken kann. Der rinnenförmige Abschnitt ist bevorzugt in der Außenhaut des Kopfabschnitts in einem Bereich außerhalb einer Frontscheibe des Kopfabschnitts angeordnet, da er sich dort in besonders einfacher Weise realisieren lässt. Zudem ist die Anordnung an dieser typischerweise (in Fahrzeugquerrichtung) relativ weit außen liegenden Stelle im Hinblick auf die Reduktion der Seitenwindempfindlichkeit bei geringer Geräuschentwicklung und geringem Fahrwiderstand besonders effektiv, da schon durch die allgemeine Formgebung der Kopfabschnitte in diesem Bereich ein entsprechend scharfes bzw. kliffartiges Abknicken bzw. Abfallen der Schnittkontur bezüglich der Hauptströmungsrichtung begünstigt wird, welches für die dauerhafte Ablösung von der Außenhaut von Vorteil ist.

Bevorzugt weist die Außenhaut in dem rinnenförmigen Abschnitt in einer senkrecht zur Fahrzeuglängsrichtung verlaufenden Fahrzeugquerebene zwischen einem Firstabschnitt des dachartigen Vorsprungs und der Fahrzeuglängsmittenebene eine Schnittkontur auf, die im Wesentlichen kontinuierlich gekrümmt ist und einen Wendepunkt aufweist, wobei der Wendepunkt insbesondere näher an dem Firstabschnitt angeordnet ist als an der Fahrzeuglängsmittenebene. Durch die hiermit realisierte wellenartige Schnittkontur kann in einfacher Weise eine insgesamt "glatte", gegebenenfalls bis auf den Firstabschnitt kantenfreie Außenhaut des Fahrzeugs realisiert werden.

Bei weiteren bevorzugten Varianten der Erfindung mit günstiger stark radialer Strömungsablenkung weist die Schnittkontur einen im Wesentlichen V-förmigen Knick auf, wobei der Knick insbesondere näher an dem Firstabschnitt angeordnet ist als an der Fahrzeuglängsmittenebene. Auch hier kann der gewünschte Effekt mit einer vergleichsweise einfach gestalteten Außenhaut realisiert werden.

Die Position und Erstreckung des rinnenförmigen Abschnitts ähnelt der Position und Erstreckung des oben beschriebenen ersten Kantenbereichs, da hiermit dieselben Effekte und Vorteile erzielt werden.

Auch bei diesen Varianten weist der Kopfabschnitt in der Fahrzeuglängsrichtung zwischen dem freien Fahrzeugende und einem Anschluss zu dem Rumpfabschnitt eine maximale Kopflänge auf, wobei sich der rinnenförmige Abschnitt dann also in der Fahrzeuglängsrichtung dann über wenigstens 30% der maximalen Kopflänge erstreckt, vorzugsweise wenigstens 60% der maximalen Kopflänge, weiter vorzugsweise über 30% bis 80% der maximalen Kopflänge.

Zusätzlich oder alternativ beginnt der rinnenförmige Abschnitt ausgehend von dem freien Fahrzeugende in der Fahrzeuglängsrichtung in einem dritten relativen Längsabstand, der mindestens 2% der maximalen Kopflänge beträgt, vorzugsweise mindestens 5% der maximalen Kopflänge beträgt, weiter vorzugsweise mindestens 15% der maximalen Kopflänge beträgt. Auch hier nimmt der dritte relative Längsabstand im Allgemeinen für unterschiedliche Fahrzeuge mit steigender Nennbetriebsgeschwindigkeit des Schienenfahrzeugs zu.

Zusätzlich oder alternativ endet der rinnenförmige Abschnitt ausgehend von dem freien Fahrzeugende in der Fahrzeuglängsrichtung in einem vierten relativen Längsabstand, der höchstens 90% der maximalen Kopflänge beträgt, vorzugsweise höchstens 80% der maximalen Kopflänge beträgt, weiter vorzugsweise höchstens 50% der maximalen Kopflänge beträgt, wobei der vierte relative Längsabstand wiederum bevorzugt für unterschiedliche Fahrzeuge mit steigender Nennbetriebsgeschwindigkeit des Schienenfahrzeugs zunimmt.

Bei weiteren Varianten der Erfindung weist der Kopfabschnitt in der Fahrzeughöhenrichtung zwischen einer Fahrzeugunterkante und einer Fahrzeugoberkante eine maximale Kopfhöhe auf, wobei sich der rinnenförmige Abschnitt in der Fahrzeughöhenrichtung bevorzugt über wenigstens 35% der maximalen Kopfhöhe erstreckt, vorzugsweise über wenigstens 45% der maximalen Kopfhöhe erstreckt, weiter vorzugsweise über 40% bis 60% der maximalen Kopfhöhe erstreckt,

Zusätzlich oder alternativ beginnt der rinnenförmige Abschnitt ausgehend von der Fahrzeugunterkante in der Fahrzeughöhenrichtung in einem dritten relativen Höhenabstand, der mindestens 20% der maximalen Kopfhöhe beträgt, vorzugsweise mindestens 25% der maximalen Kopfhöhe beträgt, weiter vorzugsweise mindestens 30% der maximalen Kopfhöhe beträgt, wobei auch der dritte relative Höhenabstand insbesondere für unterschiedliche Fahrzeuge mit steigender Nennbetriebsgeschwindigkeit des Schienenfahrzeugs zunimmt.

Zusätzlich oder alternativ endet der rinnenförmige Abschnitt ausgehend von der Fahrzeugunterkante in der Fahrzeughöhenrichtung in einem vierten relativen Höhenabstand, der höchstens 95% der maximalen Kopfhöhe beträgt, vorzugsweise höchstens 85% der maximalen Kopfhöhe beträgt, weiter vorzugsweise höchstens 70% der maximalen Kopflänge beträgt, wobei der vierte relative Höhenabstand insbesondere für unterschiedliche Fahrzeuge mit steigender Nennbetriebsgeschwindigkeit des Schienenfahrzeugs zunimmt.

Bei weiteren Varianten der Erfindung weist der Kopfabschnitt in der Fahrzeugquerrichtung schließlich eine maximale Kopfbreite auf und der den rinnenförmigen Abschnitt begrenzende Firstabschnitt erstreckt sich in der Fahrzeugquerrichtung über wenigstens 10% der maximalen Kopfbreite, vorzugsweise wenigstens 15% der maximalen Kopfbreite, weiter vorzugsweise über 10% bis 20% der maximalen Kopfbreite.

Zusätzlich oder alternativ beginnt der den rinnenförmigen Abschnitt begrenzende Firstabschnitt ausgehend von der Fahrzeuglängsmittenebene in der Fahrzeugquerrichtung in einem dritten relativen Querabstand, der mindestens 15% der maximalen Kopfbreite beträgt, vorzugsweise mindestens 20% der maximalen Kopfbreite beträgt, weiter vorzugsweise mindestens 25% der maximalen Kopfbreite beträgt, wobei auch der dritte relative Querabstand insbesondere für unterschiedliche Fahrzeuge mit steigender Nennbetriebsgeschwindigkeit des Schienenfahrzeugs abnimmt.

Zusätzlich oder alternativ endet der den rinnenförmigen Abschnitt begrenzende Firstabschnitt ausgehend von der Fahrzeuglängsmittenebene in der Fahrzeugquerrichtung in einem vierten relativen Querabstand, der höchstens 35% der maximalen Kopfbreite beträgt, vorzugsweise höchstens 40% der maximalen Kopfbreite beträgt, weiter vorzugsweise höchstens 45% der maximalen Kopflänge beträgt, wobei der vierte relative Querabstand insbesondere für unterschiedliche Fahrzeuge mit steigender Nennbetriebsgeschwindigkeit des Schienenfahrzeugs abnimmt.

Grundsätzlich kann ein zentral angeordneter dachartiger Vorsprung ausreichen, um die gewünschte Strömungsablösung und damit Reduktion der Seitenwindempfindlichkeit zu realisieren. Aufgrund der für die dauerhafte Strömungsablösung günstigeren geometrischen Gegebenheiten an den in Fahrzeugquerrichtung weiter außen liegenden Abschnitten ist bevorzugt zu beiden Fahrzeugseiten jeweils ein dachartiger Vorsprung vorgesehen.

Demgemäß ist der dachartige Vorsprung bei bevorzugten Varianten der Erfindung ein erster dachartiger Vorsprung, während auf der anderen Seite der Fahrzeuglängsmittenebene an der Außenhaut ein zweiter dachartiger Vorsprung vorgesehen ist. Der zweite dachartige Vorsprung ist dann bezüglich der Fahrzeuglängsmittenebene in der Regel im Wesentlichen symmetrisch zu dem ersten dachartigen Vorsprung ausgebildet. Allerdings kann auch eine Abweichung von dieser Symmetrie vorgesehen sein, sofern hiermit unter anderen Gesichtspunkten Vorteile erzielt werden können.

Der erste dachartige Vorsprung und der zweite dachartige Vorsprung können grundsätzlich in beliebiger geeigneter Weise zu einander angeordnet sein. So können sie beispielsweise zueinander parallel verlaufen. Bei bevorzugten Varianten der Erfindung verlaufen der erste dachartige Vorsprung und der zweite dachartige Vorsprung in einer Frontansicht in Richtung der Fahrzeuglängsachse im Wesentlichen V-förmig zueinander (wobei sie sich nicht notwendigerweise treffen müssen). Der erste dachartige Vorsprung und der zweite dachartige Vorsprung können dabei in der Frontansicht zumindest abschnittsweise eine konvexe V-förmige Gestalt (mit jeweils einer von der Längsmittenebene weg nach außen gerichteten Ausbuchtung) definieren. Zusätzlich oder alternativ können der erste dachartige Vorsprung und der zweite dachartige Vorsprung in der Frontansicht zumindest abschnittsweise eine konkave V-förmige Gestalt (mit jeweils einer zu der Längsmittenebene hin nach innen gerichteten Einbuchtung) definieren.

Der Verlauf des dachartigen Vorsprungs richtet sich dabei bevorzugt nach der allgemeinen Geometrie des Kopfabschnitts, um für diesen angepasst ein Optimum hinsichtlich einer reduzierten Seitenwindempfindlichkeit bei geringer Geräuschentwicklung und geringem Fahrwiderstand zu erzielen. Dabei ist der Verlauf des dachartigen Vorsprungs dem Verlauf der Stromlinien bei rein axialer Anströmung angenähert, um eine möglichst geringe Geräuschentwicklung und bei möglichst geringem Fahrwiderstand zu erzielen. Bevorzugt ist der dachartige Vorsprung daher derart angeordnet, dass er einen an eine Richtstromlinie zumindest angenäherten Verlauf aufweist, insbesondere einer Richtstromlinie im Wesentlichen folgt. Die Richtstromlinie ergibt sich hierbei bei rein in Fahrzeuglängsrichtung erfolgender Anströmung eines Vergleichsfahrzeugs mit einer geglätteten, insbesondere kontinuierlich gekrümmten Vergleichsaußenhaut ohne den dachartigen Vorsprung aber mit ansonsten identischer Gestalt.

Die vorliegende Erfindung lässt sich grundsätzlich für beliebige Fahrzeuge einsetzen. Bevorzugt handelt es sich um ein Fahrzeug für den Hochgeschwindigkeitsverkehr mit einer Nennbetriebsgeschwindigkeit oberhalb von 250 km/h, insbesondere oberhalb von 300 km/h, da ihre Vorteile in diesen Geschwindigkeitsbereichen besonders gut zum Tragen kommen. Ebenfalls besonders effektiv lässt sich die Erfindung bei wegen ihrer Höhe besonders gegen Seitenwind empfindlichen Doppelstockfahrzeugen einsetzen. Auch bei vergleichsweise leichten und damit besonders gegen Seitenwind empfindlichen Fahrzeugen, wie Straßenbahnen, Schmalspurfahrzeugen, Endwagen für Triebzüge, insbesondere Steuerwagen für Triebzüge, kommen ihre Vorteile besonders gut zum Tragen.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:

Figur 1      eine schematische perspektivische Ansicht eines Teils einer bevorzugten Ausführungsform des erfindungsgemäßen Fahrzeugs;

Figur 2      eine schematische Seitenansicht des Fahrzeugs aus Figur 1;

Figur 3      eine schematische Frontansicht des Fahrzeugs aus Figur 1;

| Figur 4 | eine schematische Frontansicht eines Teils der Fahrzeugspitze des Fahrzeugs aus Figur 1, der in einer senkrecht zur Fahrzeuglängsrichtung verlaufenden Schnittebene freigeschnitten wurde; |
| --- | --- |
| Figur 5 | eine schematische Frontansicht des Details V aus Figur 4; |
| Figur 6 | den Verlauf des Dachwinkels über die Kopflänge wiedergebende Diagramme für unterschiedliche Fahrzeuge; |
| Figur 7 | eine schematische perspektivische Ansicht eines Teils einer weiteren bevorzugten Ausführungsform des erfindungsgemäßen Fahrzeugs; |
| Figur 8 | eine schematische Seitenansicht des Fahrzeugs aus Figur 7; |
| Figur 9 | eine schematische Frontansicht des Fahrzeugs aus Figur 7; |
| Figur 10 | eine schematische Frontansicht eines Teils der Fahrzeugspitze des Fahrzeugs aus Figur 7, der in einer senkrecht zur Fahrzeuglängsrichtung verlaufenden Schnittebene freigeschnitten wurde; |
| Figur 11 | eine schematische Frontansicht des Details XI aus Figur 10; |
| Figur 12A bis 12D | jeweils eine schematische Frontansicht eines Teils der Fahrzeugspitze des Fahrzeugs aus Figur 7, die in unterschiedlichen senkrecht zur Fahrzeuglängsrichtung verlaufenden Schnittebenen freigeschnitten wurden; |
| Figur 13 | eine schematische perspektivische Ansicht eines Teils einer weiteren bevorzugten Ausführungsform des erfindungsgemäßen Fahrzeugs; |
| Figur 14 | eine schematische Seitenansicht des Fahrzeugs aus Figur 13; |
| Figur 15 | eine schematische Frontansicht des Fahrzeugs aus Figur 13; |
| Figur 16 | eine schematische Frontansicht eines Teils der Fahrzeugspitze des Fahrzeugs aus Figur 13, der in einer senkrecht zur Fahrzeuglängsrichtung verlaufenden Schnittebene freigeschnitten wurde; |
| Figur 17 | eine schematische Frontansicht des Details XVII aus Figur 16; |
| Figur 18A bis 18D | jeweils eine schematische Frontansicht eines Teils der Fahrzeugspitze des Fahrzeugs aus Figur 13, die in unterschiedlichen senkrecht zur Fahrzeuglängsrichtung verlaufenden Schnittebenen freigeschnitten wurden. |

Erstes Ausführungsbeispiel

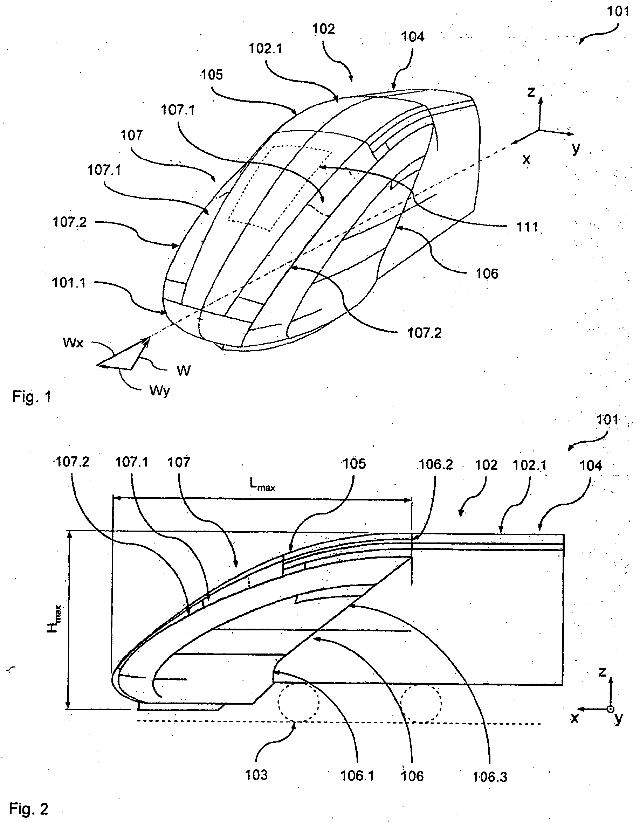

Im Folgenden wird unter Bezugnahme auf die Figuren 1 bis 6 ein erstes bevorzugtes Ausführungsbeispiel des erfindungsgemäßen Fahrzeugs in Form eines Schienenfahrzeugs 101 beschrieben. Bei dem Schienenfahrzeug 101 handelt es sich um einen Endwagen eines Triebzugs für den Intercityverkehr, dessen Nennbetriebsgeschwindigkeit oberhalb von 200 km/h, nämlich bei $V_n$ = 250 km/h, liegt.

Das Fahrzeug 101 umfasst einen Wagenkasten 102, der eine Außenhaut 102.1 des Fahrzeugs 101 definiert. Der Wagenkasten 102 ist im Bereich seiner beiden Enden in herkömmlicher Weise jeweils auf einem Fahrwerk in Form eines Drehgestells 103 abgestützt ist. Es versteht sich jedoch, dass die vorliegende Erfindung auch in Verbindung mit anderen Konfigurationen eingesetzt werden kann, bei denen der Wagenkasten lediglich auf einem Fahrwerk abgestützt ist.

Zum einfacheren Verständnis der nachfolgenden Erläuterungen ist in den Figuren ein (durch die Radaufstandsebene des Drehgestells 103 vorgegebenes) Fahrzeug-Koordinatensystem x,y,z angegeben, in dem die x-Koordinate die Längsrichtung des Schienenfahrzeugs 101, die y-Koordinate die Querrichtung des Schienenfahrzeugs 101 und die z-Koordinate die Höhenrichtung des Schienenfahrzeugs 101 bezeichnen.

Der Wagenkasten 102 weist einen Rumpfabschnitt 104 und einen daran anschließenden Kopfabschnitt 105 auf. Der Rumpfabschnitt 104 weist (abgesehen von lokalen Ausschnitten für funktionale Komponenten des Fahrzeugs, wie beispielsweise Stromabnehmer, Dachcontainer etc.) eine im Wesentlichen prismatische Gestaltung (mit entlang der Fahrzeuglängsrichtung im Wesentlichen identischen Schnittkonturen der Außenhaut 102.1) auf. Demgegenüber verjüngt sich der Kopfabschnitt 105 sowohl in Fahrzeughöhenrichtung als auch in Fahrzeugquerrichtung zum Ende des Fahrzeugs 101 hin, sodass er im Betrieb des Fahrzeugs 101 ein freies Fahrzeugende des Fahrzeugs 101 bilden kann.

In dem Kopfabschnitt 105 ist ein Abteil für den Fahrzeugführer vorgesehen, von dem aus der Fahrzeugführer das Fahrzeug 101 steuert. Im vorliegenden Beispiel ist das Fahrzeug 101 als vergleichsweise leichter Steuerwagen ohne schwere, zentrale Komponenten der Traktionsausrüstung (wie beispielsweise einen Haupttransformator etc.) ausgeführt. Es versteht sich jedoch, dass das Fahrzeug 101 bei anderen Varianten der Erfindung beispielsweise auch ein Triebwagen mit entsprechend schweren, zentralen Komponenten der Traktionsausrüstung sein kann.

Der Anschlussbereich 106 zwischen dem Kopfabschnitt 105 und dem Rumpfabschnitt 104 ist durch den jeweiligen Übergangspunkt auf der Außenhaut 102.1 definiert, an dem die Außenhaut 102.1 in einen prismatischen Bereich übergeht, sich also der Abstand der Außenhaut 102.1 zur Längsmittenebene (xz-Ebene) bei einem Fortschreiten entlang der Fahrzeuglängsrichtung nicht mehr ändert.

Dieser Übergangspunkt kann über die Fahrzeughöhe an unterschiedlichen Positionen in der Fahrzeuglängsrichtung liegen. Wie beispielsweise den Figuren 1 und 2 zu entnehmen ist, verläuft der Anschlussbereich 106 in seinem unteren Bereich 106.1 sowie in seinem oberen Bereich 106.2 im Wesentlichen in der Fahrzeughöhenrichtung (z-Richtung), während er über den dazwischen liegenden mittleren Bereich 106.3 schräg nach hinten geneigt verläuft. Es versteht sich jedoch, dass der Anschlussbereich bei anderen Varianten der Erfindung auch in einer einzigen senkrecht zur Fahrzeuglängsrichtung verlaufenden Ebene liegen kann.

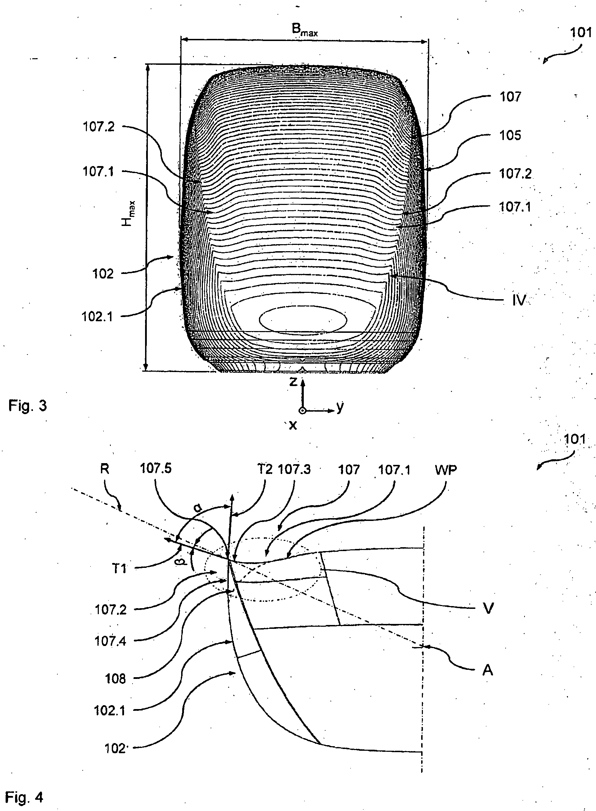

Wie der Figur 2 zu entnehmen ist, weist der Kopfabschnitt 105 eine maximale Kopflänge $L_{max}$ auf, die durch den in Fahrzeuglängsrichtung (x-Richtung) gemessenen maximalen Abstand zwischen der Fahrzeugspitze 101.1 und dem Anschlussbereich 106 definiert ist (siehe Figur 2). Eine maximale Kopfhöhe $H_{max}$ des Kopfabschnitts 105 ist durch den in Fahrzeughöhenrichtung (z-Richtung) gemessenen maximalen Abstand zwischen der Fahrzeugunterseite des Kopfabschnitts 105 und dem Dach des Kopfabschnitts 105 definiert (siehe Figur 2 und 3). Eine maximale Kopfbreite $B_{max}$ des Kopfabschnitts 105 ist schließlich durch den in Fahrzeugquerrichtung (y-Richtung) gemessenen maximalen Abstand zwischen den beiden Fahrzeugseiten des Kopfabschnitts 105 definiert (siehe Figur 3).

Wie bereits eingangs erläutert wurde, besteht bei einem solchen Fahrzeug 101 mit seiner vergleichsweise hohen Nennbetriebsgeschwindigkeit und seinem vergleichsweise geringen Gewicht grundsätzlich das Problem, dass es eine erhöhte so genannte Seitenwindempfindlichkeit aufweist.

So kommt es, wie in Figur 1 vereinfachend anhand der Vektoren Wx, Wy und W dargestellt ist, beispielsweise durch Seitenwind Wy in Kombination mit der parallel zur Fahrzeuglängsrichtung vorherrschenden Anströmung Wx (die aus der Fahrgeschwindigkeit v des Fahrzeugs 101 und einer eventuellen Komponente des Windes über Grund in dieser Richtung resultiert) zu einer insgesamt schrägen Anströmung W des Wagenkastens 102, für welche die nachfolgende Vektorgleichung gilt:

$$\vec{W} = \vec{W}x + \vec{W}y. \qquad\qquad (1)$$

Mit zunehmender Anströmgeschwindigkeit W bzw. zunehmender Abweichung von der fahrtrichtungsparallelen Anströmung kann es bei herkömmlichen Fahrzeugen zu einer ungünstigen Druckverteilung an dem vorlaufenden Fahrzeugkopf kommen, die unter anderem einen Auftrieb und gegebenenfalls ein Rollmoment im Bereich des Fahrzeugkopfes bewirkt, welche gegebenenfalls zu einer erheblichen Radentlastung an dem Fahrwerk im Bereich des Fahrzeugkopfes führen kann.

Um die Seitenwindstabilität des Fahrzeugs 101 zu erhöhen (bzw. die Seitenwindempfindlichkeit zu reduzieren) ist am Kopfabschnitt 105 eine Strömungsabrisseinrichtung 107 vorgesehen, welche bei schräger Anströmung W durch eine frühzeitige und dauerhafte leeseitige Ablösung der Strömung von der Außenhaut 102.1 den ungünstigen Charakter (beispielsweise eine in Fahrzeugquerrichtung vorherrschende Ungleichmäßigkeit) der Druckverteilung im Bereich des Kopfabschnitts 105 zumindest reduziert und somit hieraus andernfalls resultierende übermäßige Radentlastungen am Fahrwerk 103 vermeidet.

Die Strömungsabrisseinrichtung 107 umfasst hierzu zu beiden Seiten des Wagenkastens 102 jeweils einen in die Außenhaut 102.1 integrierten rinnenförmigen Abschnitt 107.1, auf dessen (in Fahrzeugquerrichtung) äußerer Seite jeweils ein im Wesentlichen starrer dachartiger Vorsprung 107.2 definiert ist. Der dachartige Vorsprung 107.2 ragt gegenüber einer in Figur 4 durch die gestrichelte Kontur 108 angedeuteten Geometrie herkömmlicher Fahrzeuge mit abgerundeter Außenhaut nach außen hervor. Dieser dachartige Vorsprung 107.2 ist bei schräger Anströmung des Fahrzeugs 101 leeseitig von der Fahrzeuglängsmittenebene (xz-Ebene) beabstandet angeordnet und bildet dort mit seinem Firstabschnitt eine Strömungsabrisskante für die Luftströmung.

Der dachartige Vorsprung 107.2 ist derart ausgeprägt gestaltet, dass bei sämtlichen im Normalbetrieb des Fahrzeugs 101 erreichbaren Fahrgeschwindigkeiten v, bei denen durch Seitenwind (beispielsweise im Sinne der eingangs genannten TSI RS) eine kritische Radentlastung auftreten könnte, eine zuverlässige, dauerhafte Ablösung der Strömung von der Außenhaut 102.1 gewährleistet ist, mithin also ein Wiederanlegen der Strömung an die Außenhaut 102.1 (in Strömungsrichtung) hinter dem Vorsprung 107.2 zuverlässig verhindert wird. Hiermit ist es beispielsweise möglich, trotz des vergleichsweise geringen Gewichts des Fahrzeugs 101 die Kriterien an die Seitenwindstabilität, wie sie beispielsweise in der eingangs genannten TSI RS definiert sind, einzuhalten, ohne auf konventionelle Hilfsmittel wie beispielsweise zusätzlichen Ballast oder dergleichen oder eine frühzeitige durch Seitenwind erzwungene Reduktion der Fahrgeschwindigkeit zurückgreifen zu müssen.

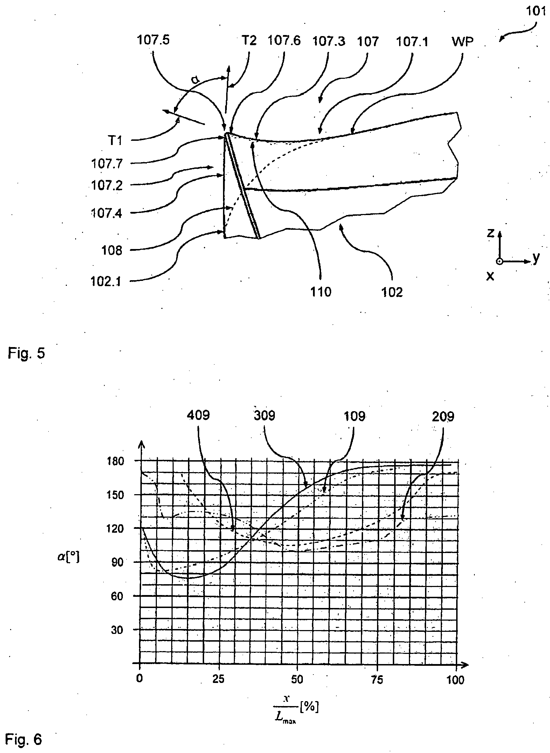

Wie insbesondere den Figuren 4 und 5 zu entnehmen ist, weist der dachartige Vorsprung 107.2 hierzu einen der Fahrzeuglängsmittenebene (xz-Ebene) zugewandten ersten Dachabschnitt 107.3, einen der Fahrzeuglängsmittenebene abgewandten zweiten Dachabschnitt 107.4 und einen Firstabschnitt 107.5 auf, der einen Übergang zwischen dem ersten Dachabschnitt 107.3 und dem zweiten Dachabschnitt 107.4 bildet.

Der erste Dachabschnitt 107.3 und der zweite Dachabschnitt 107.4 verlaufen derart zueinander geneigt, dass der Firstabschnitt 107.5 unter anderem bei der Nennbetriebsgeschwindigkeit $V_n$ des Schienenfahrzeugs und einer schrägen Anströmung W des Wagenkastens 102 und damit auch einer schrägen Anströmung des dachartigen Vorsprungs 107.2 durch einen Luftstrom von der Fahrzeuglängsmittenebene her eine Strömungsabrisskante für den Luftstrom bildet.

Um die zuverlässige und dauerhafte Ablösung der Luftströmung bei schräger Anströmung des Wagenkastens 102 zu gewährleisten, sind der erste Dachabschnitt 107.3 und der zweite Dachabschnitt 107.4 derart zueinander angeordnet, dass der Luftströmung bei schräger Anströmung des Fahrzeugs 101 durch den ersten Dachabschnitt 107.3 im grenzschichtnahen Bereich der Luftströmung zum einen eine Hauptströmungsrichtung aufgeprägt wird. Zum anderen knickt die Schnittkontur der Außenhaut 102.1 (in einer die Hauptströmungsrichtung enthaltenden Schnittebene) im Bereich des zweiten Dachabschnitts 107.4 (in der Hauptströmungsrichtung nach dem Firstabschnitt 107.5) derart scharf bzw. kliffartig bezüglich der Hauptströmungsrichtung ab, dass die Luftströmung nicht in der Lage ist, dieser rapiden Richtungsänderung der Außenhaut 102.1 zu folgen, und sich demgemäß dauerhaft von der Außenhaut 102.1 ablöst.

Der erste Dachabschnitt 107.3 ist im vorliegenden Beispiel derart ausgebildet, dass er in einer senkrecht zur Fahrzeuglängsrichtung verlaufenden Fahrzeugquerebene dem Luftstrom bei einer Anströmung in der Fahrzeugquerrichtung (y-Richtung) von der Fahrzeuglängsmittenebene (xz-Ebene) her in einem ersten Anschlussbereich 107.6 zu dem Firstabschnitt 107.5 eine erste Tangentialrichtung T1 aufprägt. Weiterhin ist der zweite Dachabschnitt 107.4 derart ausgebildet, dass er in der Fahrzeugquerebene einem Luftstrom bei einer Anströmung in der Fahrzeugquerrichtung (y-Richtung) zu der Fahrzeuglängsmittenebene (xz-Ebene) hin in einem zweiten Anschlussbereich 107.7 zu dem Firstabschnitt 107.5 eine zweite Tangentialrichtung T2 aufprägt (siehe Figuren 4 und 5).

Die erste Tangentialrichtung T1 und die zweite Tangentialrichtung T2 definieren dabei einen (zwischen den beiden Dachabschnitten 107.3, 107.4 eingeschlossenen) Dachwinkel $\alpha$ des dachartigen Vorsprungs 107.2.

Um die beschriebene rapide Richtungsänderung der Außenhaut 102.1 und damit die gewünschte dauerhafte Ablösung der Strömung zu erzielen, beträgt der Dachwinkel $\alpha$ über einen ersten Kantenbereich des dachartigen Vorsprungs 107.2, der sich in der Fahrzeuglängsrichtung erstreckt, weniger als 120°, wie dies insbesondere der Kurve 109 aus Figur 6 zu entnehmen ist. Die Kurve 109 aus Figur 6 stellt dabei für das Fahrzeug 101 den Verlauf des Dachwinkels $\alpha$ (in Grad) über die auf die maximale Kopflänge $L_{max}$ des Kopfabschnitts 105 bezogene x-Koordinate (in Prozent) ausgehend von der Fahrzeugspitze (0%) dar. Entsprechendes ist auch den Schnittkonturen der Außenhaut 102.1 (in Schnittebenen senkrecht zur Fahrzeuglängsrichtung) zu entnehmen, die nach Art von Höhenlinien in der Figur 3 dargestellt sind.

Wie der Kurve 109 insbesondere zu entnehmen ist, erstreckt sich der erste Kantenbereich von etwa 1% bis 42% (also über etwa 41%) der maximalen Kopflänge $L_{max}$. In einem zweiten Kantenbereich, der sich von etwa 1,5% bis 41 % (also über etwa 39,5%) der maximalen Kopflänge $L_{max}$ erstreckt, beträgt der Dachwinkel $\alpha$ weniger als 110°. In einem dritten Kantenbereich, der sich von etwa 2% bis 29% (also über etwa 27%) der maximalen Kopflänge $L_{max}$ erstreckt, beträgt der Dachwinkel $\alpha$ weniger als 100°. In einem vierten Kantenbereich, der sich von etwa 3% bis 20% (also über etwa 17%) der maximalen Kopflänge $L_{max}$ erstreckt, beträgt der Dachwinkel $\alpha$ weniger als 90°. Der minimale Dachwinkel $\alpha_{min} = 82°$ wird in dem in Figur 4 dargestellten Schnitt erreicht (welcher der Schnittkontur IV aus Figur 3 entspricht), der bei etwa 8% der maximalen Kopflänge $L_{max}$ liegt.

Hinsichtlich der Position des dachartigen Vorsprungs 107.2 in der Fahrzeughöhenrichtung (z-Richtung) ist anzumerken, dass sich der Firstabschnitt 107.5 des ersten Kantenbereichs ausgehend von der Fahrzeugunterkante (0%) von etwa 25% bis 61 % (also über etwa 36%) der maximalen Kopfhöhe $H_{max}$ erstreckt, wobei der Firstabschnitt 107.5 zum Rumpfabschnitt 104 hin ansteigt. In dem zweiten Kantenbereich erstreckt sich der Firstabschnitt 107.5 von etwa 25,5% bis 56% (also über etwa 30,5%) der maximalen Kopfhöhe $H_{max}$. In dem dritten Kantenbereich erstreckt sich der Firstabschnitt 107.5 von etwa 26% bis 51% (also über etwa 25%) der maximalen Kopfhöhe $H_{max}$. In dem vierten Kantenbereich erstreckt sich der Firstabschnitt 107.5 von etwa 31% bis 43% (also über etwa 12%) der maximalen Kopfhöhe $H_{max}$. Der Punkt des Firstabschnitts 107.5 mit dem minimalen Dachwinkel ($\alpha_{min} = 82°$; siehe Figur 4) liegt bei etwa 33,5% der maximalen Kopfhöhe $H_{max}$. Hinsichtlich der Position des dachartigen Vorsprungs 107.2 in der Fahrzeugquerrichtung (y-Richtung) ist anzumerken, dass sich der Firstabschnitt 107.5 des ersten Kantenbereichs ausgehend von der Längsmittenebene (0%) von etwa 32% bis 39% (also über etwa 7%) der maximalen Kopfbreite $B_{max}$ erstreckt, wobei sich der Firstabschnitt 107.5 zum Rumpfabschnitt 104 hin von der Längsmittenebene entfernt. In dem zweiten Kantenbereich erstreckt sich der Firstabschnitt 107.5 von etwa 32,2% bis 38% (also über etwa 5,8%) der maximalen Kopfbreite $B_{max}$. In dem dritten Kantenbereich erstreckt sich der Firstabschnitt 107.5 von etwa 32,5% bis 37,2% (also über etwa 4,7%) der maximalen Kopfbreite $B_{max}$. In dem vierten Kantenbereich erstreckt sich der Firstabschnitt 107.5 von etwa 33% bis 35,9% (also über etwa 2,9%) der maximalen Kopfbreite $B_{max}$. Der Punkt des Firstabschnitts 107.5 mit dem minimalen Dachwinkel ($\alpha_{min}$ = 82°; siehe Figur 4) liegt bei etwa 34,5% der maximalen Kopfbreite $B_{max}$.

Im vorliegenden Beispiel bildet die Außenhaut 102.1 im Bereich der Dachabschnitte 107.3 bzw. 107.4 eine im Wesentlichen glatte Oberfläche (mit in Fahrzeugquerrichtung höchstens moderater Änderung der Krümmung). Die Schnittkontur in der Außenhaut 102.1 weist in einer zur Fahrzeuglängsrichtung senkrecht verlaufenden Schnittebene einen Wendepunkt WP auf, der näher an dem Firstabschnitt 107.5 angeordnet ist als an der Fahrzeuglängsmittenebene. Hierdurch ergibt sich eine im Hinblick auf die störungsfreie Anströmung vorteilhafte wellenartige Schnittkontur, mit der in einfacher Weise eine insgesamt glatte, bis auf den Firstabschnitt kantenfreie Außenhaut 102.1 des Fahrzeugs 101 realisiert werden kann.

Insbesondere entspricht hierdurch die erste Tangentialrichtung T1 bzw. die zweite Tangentialrichtung T2 jeweils der Tangente an den ersten Anschlussbereich 107.6 bzw. den zweiten Anschlussbereich 107.7. Es versteht sich jedoch, dass die Außenhaut 102.1 des Wagenkastens 102 bei anderen Varianten der Erfindung in dem jeweiligen Anschlussbereich nicht notwendigerweise eine derart glatte Kontur bzw. Oberfläche aufweisen muss. Vielmehr sind hier lokale Abweichungen möglich (z. B. lokale Rippen, Kanten, Dellen etc., wie sie in Figur 5 durch die gestrichelte Kontur 110 angedeutet sind), solange der jeweiligen Strömung im grenzschichtnahen Bereich die jeweilige Tangentialrichtung T1 bzw. T2 als Hauptströmungsrichtung aufgeprägt wird.

Der Firstabschnitt 107.5 ist so gestaltet, dass in seinem Bereich eine ausreichend schroffe bzw. rapide Richtungsänderung der Außenhaut 102.1 erfolgt, die ein dauerhaftes Ablösen der Strömung gewährleistet. Hierzu ist der Firstabschnitt 107.5 in einer senkrecht zur Fahrzeuglängsrichtung verlaufenden Fahrzeugquerebene im Wesentlichen scharfkantig ausgebildet. Hierzu ist der Firstabschnitt 107.5 zwar abgerundet, der Krümmungsradius des Firstabschnitts 107.5 beträgt aber lediglich 5 mm beträgt (gegebenenfalls sogar nur 2 mm), während seine maximale Querabmessung weniger als 5 mm beträgt (gegebenenfalls sogar weniger als 3 mm) beträgt, sodass er eine ausgeprägte Kante definiert, welche dieses dauerhafte Ablösen der Strömung begünstigt, aber noch ausreichend einfach zu fertigen ist.

Wie den Figuren 3 und 4 weiterhin zu entnehmen ist, ist der dachartige Vorsprung 107.2 im vorliegenden Beispiel derart nach Art einer Rampe gestaltet und angeordnet, dass der Luftströmung in seinem Bereich eine starke radial von der Außenhaut 102.1 weg gerichtete Strömungskomponente aufgeprägt wird. Wie Figur 4 zu entnehmen ist, ist die Radialrichtung im Sinne der vorliegenden Erfindung in einem senkrecht zur Fahrzeuglängsrichtung verlaufenden Fahrzeugquerschnitt durch eine Verbindungslinie R zwischen einem Punkt des Firstabschnitts 107.5 und dem Flächenschwerpunkt A des Fahrzeugquerschnitts definiert. Im vorliegenden Beispiel schließen die erste Tangentialrichtung T1 und die Radialrichtung R über den ersten Kantenbereich einen Winkel $\beta$ von weniger als 45° ein. In dem in Figur 4 dargestellten Schnitt beträgt der Winkel $\beta$ sogar nur etwa 5°.

Wie den Figuren 1 und 3 weiterhin zu entnehmen ist, ist der rinnenförmige Abschnitt 107.1 mit dem dachartigen Vorsprung 107.2 in einem (in Fahrzeugquerrichtung) relativ weit außen liegenden Bereich außerhalb einer Frontscheibe 111 des Kopfabschnitts 105 angeordnet, da er sich dort in besonders einfacher Weise realisieren lässt. Zudem ist diese vergleichsweise weit außen liegende Position im Hinblick auf die einfache Realisierung des dachartigen Vorsprungs 107.2 von Vorteil, da durch die allgemeine Formgebung des Kopfabschnitts 105 in diesem weit außen liegenden Bereich ein entsprechend scharfes bzw. kliffartiges Abknicken der Außenhaut 102.1 bezüglich der Hauptströmungsrichtung begünstigt wird.

Der Verlauf der dachartigen Vorsprünge 107.1 richtet sich nach der allgemeinen Geometrie des Kopfabschnitts 105, um für diesen angepasst ein Optimum hinsichtlich einer reduzierten Seitenwindempfindlichkeit bei geringer Geräuschentwicklung und geringem Fahrwiderstand zu erzielen.

Wie den Figuren 1 und 3 in diesem Zusammenhang weiterhin zu entnehmen ist, verlaufen die Firstabschnitte 107.5 der beiden dachartigen Vorsprünge 107.1 in einer Frontansicht in Richtung der Fahrzeuglängsachse im Wesentlichen V-förmig zueinander, wobei sie eine konvexe V-förmige Gestalt definieren. Hierdurch wird in vorteilhafter Weise eine Annäherung des Verlaufs der Firstabschnitte 107.5 bzw. der dachartigen Vorsprünge 107.1 an den Verlauf der Stromlinien bei rein axialer Anströmung erzielt. Dies ist insoweit von großem Vorteil, als hiermit bei rein axialer Anströmung des Wagenkastens 102 durch die dachartigen Vorsprünge 107.1, insbesondere durch deren Firstabschnitte 107.5, keine Störung in die Strömung eingebracht wird, sodass sich bei rein axialer Anströmung bzw. nur schwach hiervon abweichender Anströmung eine möglichst geringe Geräuschentwicklung sowie ein möglichst geringer Fahrwiderstand ergibt.

Im vorliegenden Beispiel folgt der Verlauf der Firstabschnitte 107.5 bzw. der dachartigen Vorsprünge 107.1 hierzu dem Verlauf einer Richtstromlinie. Die Richtstromlinie ist dabei eine im Wesentlichen ungestörte Stromlinie, die sich bei rein in Fahrzeuglängsrichtung erfolgender Anströmung des Wagenkastens 102 ergibt. Bei anderen Varianten der Erfindung kann auch insoweit eine Anpassung an ein herkömmliches Vergleichsfahrzeug mit einer geglätteten kontinuierlich gekrümmten Vergleichsaußenhaut ohne den dachartigen Vorsprung, aber ansonsten identischer Gestalt erfolgen. Die Richtstromlinie ergibt sich dann bei rein in Fahrzeuglängsrichtung erfolgender Anströmung des Vergleichsfahrzeugs.

Zweites Ausführungsbeispiel

Eine weitere vorteilhafte Ausführung des erfindungsgemäßen Fahrzeugs 201 wird im Folgenden mit Bezug auf die Figuren 6 bis 12D beschrieben. Das Fahrzeug 201 entspricht dabei in seiner grundsätzlichen Gestaltung und Funktionsweise dem Fahrzeug 101 aus den Figuren 1 bis 5, sodass hier lediglich auf die Unterschiede eingegangen werden soll. Insbesondere sind gleichartige Komponenten mit um den Wert 100 erhöhten Bezugzeichen versehen. Sofern nachfolgend nichts Anderweitiges ausgeführt wird, wird hinsichtlich der Merkmale, Funktionen und Vorteile dieser Komponenten auf die obigen Ausführungen im Zusammenhang mit dem ersten Ausführungsbeispiel verwiesen.

Der Unterschied zu dem Fahrzeug 101 besteht darin, dass es sich bei dem Fahrzeug 201 um einen Steuerwagen für einen Triebzug handelt, dessen Nennbetriebsgeschwindigkeit oberhalb von 300 km/h, nämlich bei $V_n = 360$ km/h, liegt.

Um die Seitenwindstabilität des Fahrzeugs 201 zu erhöhen, ist am Kopfabschnitt 205 des Wagenkastens 202 wiederum eine Strömungsabrisseinrichtung 207 vorgesehen, welche bei schräger Anströmung W durch eine frühzeitige und dauerhafte leeseitige Ablösung der Strömung von der Außenhaut 202.1 den ungünstigen Charakter (beispielsweise eine in Fahrzeugquerrichtung vorherrschende Ungleichmäßigkeit) der Druckverteilung im Bereich des Kopfabschnitts 205 zumindest reduziert und somit hieraus andernfalls resultierende übermäßige Radentlastungen am Fahrwerk 203 vermeidet.

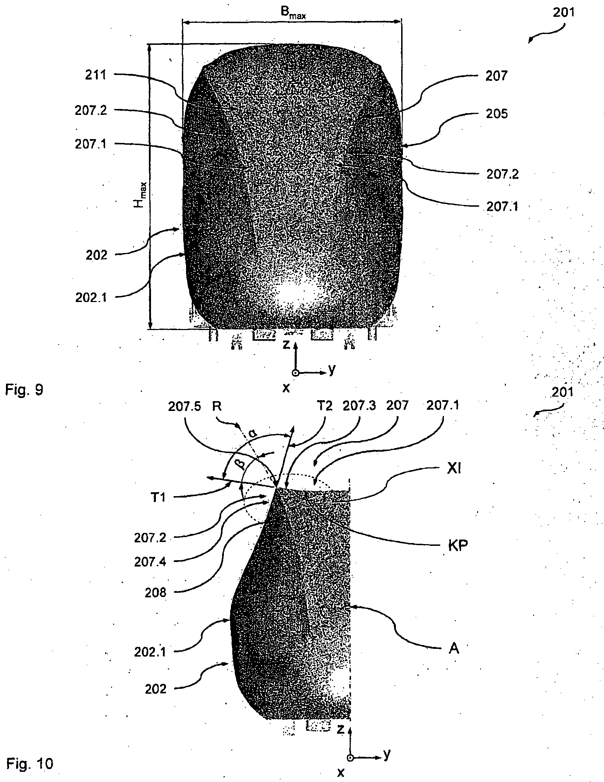

Die Strömungsabrisseinrichtung 207 umfasst hierzu wiederum zu beiden Seiten des Wagenkastens 202 jeweils einen in die Außenhaut 202.1 integrierten rinnenförmigen Abschnitt 207.1, auf dessen (in Fahrzeugquerrichtung) äußerer Seite jeweils ein im Wesentlichen starrer dachartiger Vorsprung 207.2 definiert ist. Der dachartige Vorsprung 207.2 ragt gegenüber einer in Figur 10 durch die gestrichelte Kontur 208 angedeuteten Geometrie herkömmlicher Fahrzeuge mit abgerundeter Außenhaut nach außen hervor. Dieser dachartige Vorsprung 207.2 ist bei schräger Anströmung des Fahrzeugs 201 leeseitig von der Fahrzeuglängsmittenebene (xz-Ebene) beabstandet angeordnet und bildet dort mit seinem Firstabschnitt 207.5 eine Strömungsabrisskante für die Luftströmung.

Der dachartige Vorsprung 207.2 ist derart ausgeprägt gestaltet, dass bei sämtlichen im Normalbetrieb des Fahrzeugs 201 erreichbaren Fahrgeschwindigkeiten v, bei denen durch Seitenwind (beispielsweise im Sinne der eingangs genannten TSI RS) eine kritische Radentlastung auftreten könnte, eine zuverlässige, dauerhafte Ablösung der Strömung von der Außenhaut 202.1 gewährleistet ist, mithin also ein Wiederanlegen der Strömung an die Außenhaut 202.1 (in Strömungsrichtung) hinter dem Vorsprung 207.2 zuverlässig verhindert wird. Hiermit ist es beispielsweise möglich, trotz des vergleichsweise geringen Gewichts des Fahrzeugs 201 die Kriterien an die Seitenwindstabilität, wie sie beispielsweise in der eingangs genannten TSI RS definiert sind, einzuhalten, ohne auf konventionelle Hilfsmittel, wie beispielsweise zusätzlichen Ballast oder dergleichen oder eine frühzeitige durch Seitenwind erzwungene Reduktion der Fahrgeschwindigkeit, zurückgreifen zu müssen

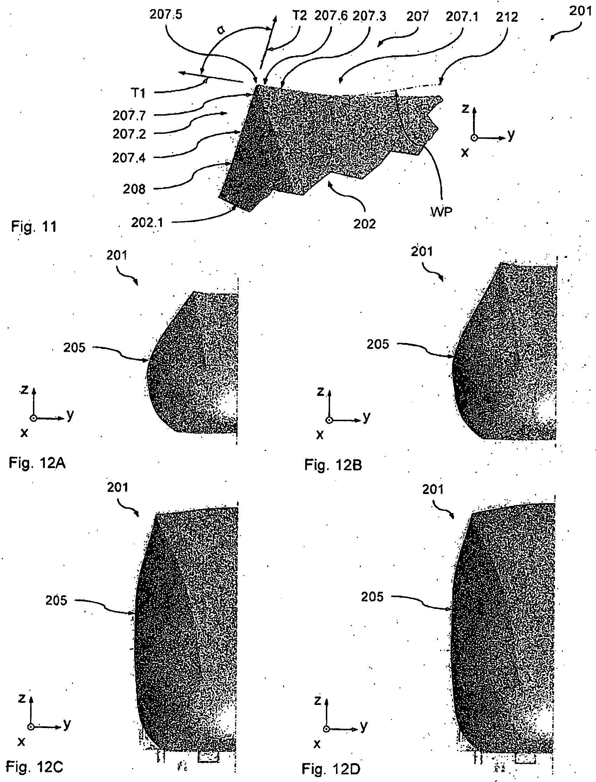

Wie insbesondere den Figuren 10 und 11 zu entnehmen ist, weist der dachartige Vorsprung 207.2 hierzu wiederum einen der Fahrzeuglängsmittenebene (xz-Ebene) zugewandten ersten Dachabschnitt 207.3, einen der Fahrzeuglängsmittenebene abgewandten zweiten Dachabschnitt 207.4 und einen scharfkantigen Firstabschnitt 207.5 (Krümmungsradius 3 mm, maximale Querabmessung weniger als 4 mm) auf, der einen Übergang zwischen dem ersten Dachabschnitt 207.3 und dem zweiten Dachabschnitt 207.4 bildet. Die Schnittkontur des ersten Dachabschnitts 207.3 und des zweiten Dachabschnitts 207.4 ist im vorliegenden Beispiel höchstens sehr schwach gekrümmt, sodass sich eine besonders einfach gestaltete, einfach zu fertigende Geometrie für den Kopfabschnitt 205 in diesem Bereich ergibt.

Um die zuverlässige und dauerhafte Ablösung der Luftströmung bei schräger Anströmung des Wagenkastens 202 zu gewährleisten, sind der erste Dachabschnitt 207.3 und der zweite Dachabschnitt 207.4 derart zueinander angeordnet, dass der Luftströmung bei schräger Anströmung des Fahrzeugs 201 durch den ersten Dachabschnitt 207.3 im grenzschichtnahen Bereich der Luftströmung zum einen eine Hauptströmungsrichtung aufgeprägt wird. Zum anderen knickt die Schnittkontur der Außenhaut 202.1 (in einer die Hauptströmungsrichtung enthaltenden Schnittebene) im Bereich des zweiten Dachabschnitts 207.4 (in der Hauptströmungsrichtung nach dem Firstabschnitt 207.5) derart scharf bzw. kliffartig bezüglich der Hauptströmungsrichtung ab, dass die Luftströmung nicht in der Lage ist, dieser rapiden Richtungsänderung der Außenhaut 202.1 zu folgen, und sich demgemäß dauerhaft von der Außenhaut 202.1 ablöst.

Der erste Dachabschnitt 207.3 und der zweite Dachabschnitt 207.4 definieren wiederum eine Tangentialrichtung T1 bzw. eine zweite Tangentialrichtung T2, die ihrerseits einen (zwischen den beiden Dachabschnitten 207.3, 207.4 eingeschlossenen) Dachwinkel $\alpha$ des dachartigen Vorsprungs 207.2 definieren.

Um die oben beschriebene rapide Richtungsänderung der Außenhaut 202.1 und damit die gewünschte dauerhafte Ablösung der Strömung zu erzielen, beträgt der Dachwinkel $\alpha$ über einen ersten Kantenbereich des dachartigen Vorsprungs 207.2, der sich in der Fahrzeuglängsrichtung erstreckt, weniger als 120°, wie dies insbesondere der Kurve 209 aus Figur 6 zu entnehmen ist. Die Kurve 209 aus Figur 6 stellt dabei für das Fahrzeug 201 den Verlauf des Dachwinkels $\alpha$ (in Grad) über die auf die maximale Kopflänge $L_{max}$ des Kopfabschnitts 205 bezogene x-Koordinate (in Prozent) ausgehend von der Fahrzeugspitze (0%) dar.

Wie der Kurve 209 insbesondere zu entnehmen ist, erstreckt sich der erste Kantenbereich von etwa 35% bis 80% (also über etwa 45%) der maximalen Kopflänge $L_{max}$. In einem zweiten Kantenbereich, der sich von etwa 42% bis 73% (also über etwa 31 %) der maximalen Kopflänge $L_{max}$ erstreckt, beträgt der Dachwinkel $\alpha$ weniger als 110°. Der minimale Dachwinkel $\alpha_{min} = 100°$ wird in dem in Figur 10 dargestellten Schnitt erreicht, der bei etwa 50% der maximalen Kopflänge $L_{max}$ liegt.

Die Figuren 12A bis 12D zeigen zur Verdeutlichung der Schnittkonturen der Außenhaut 202.1 Teile der Fahrzeugspitze 201.1, die an den beiden Enden des ersten Kantenbereichs bzw. des zweiten Kantenbereichs freigeschnitten wurden (Figur 12A bei etwa 35% der maximalen Kopflänge $L_{max}$, Figur 12B bei etwa 42%der maximalen Kopflänge $L_{max}$, Figur 12C bei etwa 73% der maximalen Kopflänge $L_{max}$ und Figur 12D bei etwa 80% der maximalen Kopflänge $L_{max}$).

Hinsichtlich der Position des dachartigen Vorsprungs 207.2 in der Fahrzeughöhenrichtung (z-Richtung) ist anzumerken, dass sich der Firstabschnitt 207.5 des ersten Kantenbereichs ausgehend von der Fahrzeugunterkante (0%) von etwa 58% bis 92% (also über etwa 34%) der maximalen Kopfhöhe $H_{maX}$ erstreckt, wobei der Firstabschnitt 207.5 zum Rumpfabschnitt 204 hin ansteigt. In dem zweiten Kantenbereich erstreckt sich der Firstabschnitt 207.5 von etwa 67% bis 91% (also über etwa 24%) der maximalen Kopfhöhe $H_{max}$. Der Punkt des Firstabschnitts 207.5 mit dem minimalen Dachwinkel ($\alpha_{min} = 100°$; siehe Figur 10) liegt bei etwa 76% der maximalen Kopfhöhe $H_{max}$.

Hinsichtlich der Position des dachartigen Vorsprungs 207.2 in der Fahrzeugquerrichtung (y-Richtung) ist anzumerken, dass sich der Firstabschnitt 207.5 des ersten Kantenbereichs ausgehend von der Längsmittelebene (0%) von etwa 24% bis 40% (also über etwa 16%) der maximalen Kopfbreite $B_{max}$ erstreckt, wobei sich der Firstabschnitt 207.5 zum Rumpfabschnitt 204 hin von der Längsmittelebene entfernt. In dem zweiten Kantenbereich erstreckt sich der Firstabschnitt 207.5 von etwa 26% bis 39% (also über etwa 13%) der maximalen Kopfbreite $B_{max}$. Der Punkt des Firstabschnitts 207.5 mit dem minimalen Dachwinkel ($\alpha_{min} = 105°$; siehe Figur 10) liegt bei etwa 30% der maximalen Kopfbreite $B_{max}$.

Im vorliegenden Beispiel bildet die Außenhaut 202.1 im Bereich der Dachabschnitte 207.3 bzw. 207.4 eine im Wesentlichen glatte Oberfläche (mit in Fahrzeugquerrichtung höchstens moderater Änderung der Krümmung). Die Schnittkontur der Außenhaut 202.1 weist in einer zur Fahrzeuglängsrichtung senkrecht verlaufenden Schnittebene einen Knickpunkt KP auf, der am Grund eines V-förmigen Knicks der Schnittkontur definiert ist.

Wie den Figuren 10 und 11 weiterhin zu entnehmen ist, ist der dachartige Vorsprung 207.2 auch im vorliegenden Beispiel derart nach Art einer Rampe gestaltet und angeordnet, dass der Luftströmung in seinem Bereich eine starke radial von der Außenhaut 202.1 weg gerichtete Strömungskomponente aufgeprägt wird. Wie Figur 10 zu entnehmen ist, ist die Radialrichtung im Sinne der vorliegenden Erfindung wiederum in einem senkrecht zur Fahrzeuglängsrichtung verlaufenden Fahrzeugquerschnitt durch eine Verbindungslinie R zwischen einem Punkt des Firstabschnitts 207.5 und dem Flächenschwerpunkt A des Fahrzeugquerschnitts definiert. Im vorliegenden Beispiel schließen die erste Tangentialrichtung T1 und die Radialrichtung R über den ersten Kantenbereich einen Winkel $\beta$ von weniger als 60° ein. In dem in Figur 10 dargestellten Schnitt beträgt der Winkel $\beta$ etwa 50°.

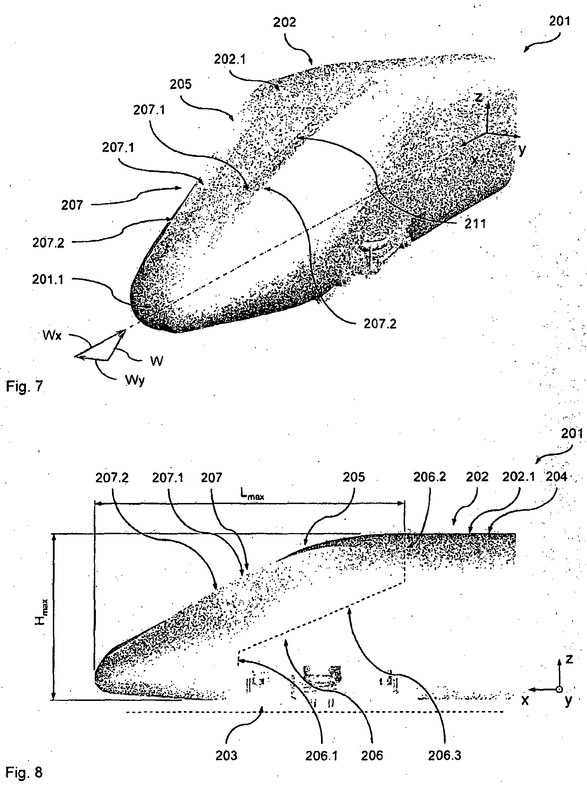

Wie den Figuren 7 und 9 weiterhin zu entnehmen ist, ist der rinnenförmige Abschnitt 207.1 mit dem dachartigen Vorsprung 207.2 in einem (in Fahrzeugquerrichtung) relativ weit außen liegenden Bereich außerhalb einer Frontscheibe 211 des Kopfabschnitts 205 angeordnet, da er sich dort in besonders einfacher Weise realisieren lässt. Zudem ist diese vergleichsweise weit außen liegende Position im Hinblick auf die einfache Realisierung des dachartigen Vorsprungs 207.2 von Vorteil, da durch die allgemeine Formgebung des Kopfabschnitt 205 in diesem weit außen liegenden Bereich ein entsprechend scharfes bzw. kliffartiges Abknicken der Außenhaut 202.1 bezüglich der Hauptströmungsrichtung begünstigt wird.

Ein weiterer Vorteil dieser Gestaltung liegt mit den beiden dachartigen Vorsprüngen 207.2 liegt darin, dass im vorliegenden Beispiel eine plane Frontscheibe 211 realisiert werden kann, wodurch sich deren Herstellung extrem vereinfacht. Es versteht sich jedoch, dass bei anderen Varianten der Erfindung auch hier wieder zwischen den beiden dachartigen Vorsprüngen 207.2 eine gewölbte Kontur vorgesehen sein kann, wie dies in Figur 11 durch die strichzweipunktierte Kontur 212 angedeutet ist. Hier ist dann wiederum jeweils ein Wendepunkt WP der Kontur 212 vorgesehen.

Der Verlauf der dachartigen Vorsprünge 207.1 richtet sich nach der allgemeinen Geometrie des Kopfabschnitts 205, um für diesen angepasst ein Optimum hinsichtlich einer reduzierten Seitenwindempfindlichkeit bei geringer Geräuschentwicklung und geringem Fahrwiderstand zu erzielen.

Wie den Figuren 7 und 9 in diesem Zusammenhang weiterhin zu entnehmen ist, verlaufen die Firstabschnitte 207.5 der beiden dachartigen Vorsprünge 207.1 in einer Frontansicht in Richtung der Fahrzeuglängsachse im Wesentlichen V-förmig zueinander, wobei sie eine konkave V-förmige Gestalt definieren. Hierdurch wird in vorteilhafter Weise eine Annäherung des Verlaufs der Firstabschnitte 207.5 bzw. der dachartigen Vorsprünge 207.1 an den Verlauf der Stromlinien bei rein axialer Anströmung erzielt. Dies ist insoweit von großem Vorteil als hiermit bei rein axialer Anströmung des Wagenkastens 202 durch die dachartigen Vorsprünge 207.1, insbesondere durch deren Firstabschnitte 207.5, keine Störung in die Strömung eingebracht wird, sodass sich bei rein axialer Anströmung bzw. nur schwach hiervon abweichender Anströmung eine möglichst geringe Geräuschentwicklung sowie ein möglichst geringer Fahrwiderstand ergibt.

Im vorliegenden Beispiel folgt der Verlauf der Firstabschnitte 207.5 bzw. der dachartigen Vorsprünge 207.1 hierzu dem Verlauf einer Richtstromlinie. Die Richtstromlinie ist dabei eine im Wesentlichen ungestörte Stromlinie, die sich bei rein in Fahrzeuglängsrichtung erfolgender Anströmung des Wagenkastens 202 ergibt. Bei anderen Varianten der Erfindung kann auch insoweit eine Anpassung an ein herkömmliches Vergleichsfahrzeug mit einer geglätteten kontinuierlich gekrümmten Vergleichsaußenhaut ohne den dachartigen Vorsprung 207.1 aber ansonsten identischer Gestalt erfolgen. Die Richtstromlinie ergibt sich dann bei rein in Fahrzeuglängsrichtung erfolgender Anströmung des Vergleichsfahrzeugs.

Drittes Ausführungsbeispiel

Eine weitere vorteilhafte Ausführung des erfindungsgemäßen Fahrzeugs 301 wird im Folgenden mit Bezug auf die Figuren 6 und 13 bis 18D beschrieben. Das Fahrzeug 301 entspricht dabei in seiner grundsätzlichen Gestaltung und Funktionsweise dem Fahrzeug 101 aus den Figuren 1 bis 5, sodass hier lediglich auf die Unterschiede eingegangen werden soll. Insbesondere sind gleichartige Komponenten mit um den Wert 200 erhöhten Bezugszeichen versehen. Sofern nachfolgend nichts Anderweitiges ausgeführt wird, wird hinsichtlich der Merkmale, Funktionen und Vorteile dieser Komponenten auf die obigen Ausführungen im Zusammenhang mit dem ersten Ausführungsbeispiel verwiesen.

Der Unterschied zu dem Fahrzeug 101 besteht darin, dass es sich bei dem Fahrzeug 301 um einen Steuerwagen für einen Doppelstockzug handelt, dessen Nennbetriebsgeschwindigkeit oberhalb von 180 km/h, nämlich bei $V_n$ = 200 km/h, liegt.

Um die Seitenwindstabilität des Fahrzeugs 301 zu erhöhen ist am Kopfabschnitt 305 des Wagenkastens 302 wiederum eine Strömungsabrisseinrichtung 307 vorgesehen, welche bei schräger Anströmung W durch eine frühzeitige und dauerhafte leeseitige Ablösung der Strömung von der Außenhaut 302.1 den ungünstigen Charakter (beispielsweise eine in Fahrzeugquerrichtung vorherrschende Ungleichmäßigkeit) der Druckverteilung im Bereich des Kopfabschnitts 305 zumindest reduziert und somit hieraus andernfalls resultierende übermäßige Radentlastungen am Fahrwerk 303 vermeidet.

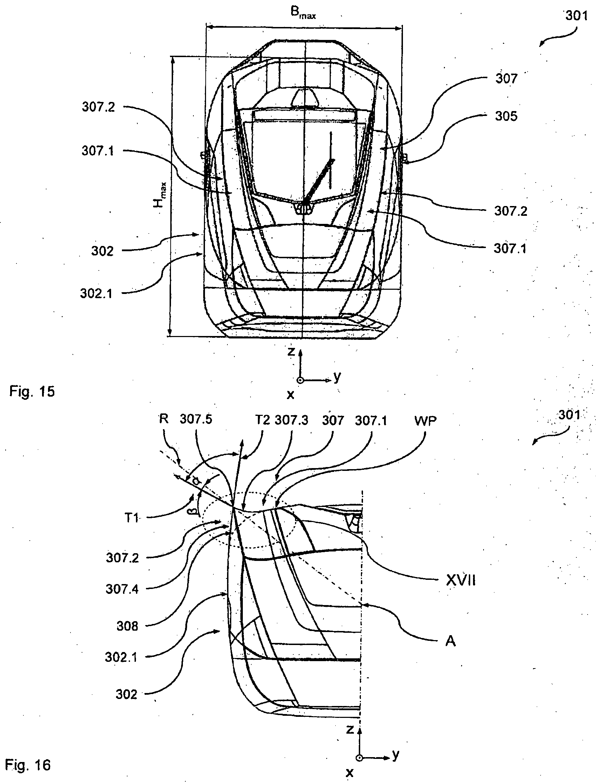

Die Strömungsabrisseinrichtung 307 umfasst hierzu wiederum zu beiden Seiten des Wagenkastens 302 jeweils einen in die Außenhaut 302.1 integrierten rinnenförmigen Abschnitt 307.1, auf dessen (in Fahrzeugquerrichtung) äußerer Seite jeweils ein im Wesentlichen starrer dachartiger Vorsprung 307.2 definiert ist. Der dachartige Vorsprung 307.2 ragt gegenüber einer in Figur 16 durch die gestrichelte Kontur 308 angedeuteten Geometrie herkömmlicher Fahrzeuge mit abgerundeter Außenhaut nach außen hervor. Dieser dachartige Vorsprung 307.2 ist bei schräger Anströmung des Fahrzeugs 301 leeseitig von der Fahrzeuglängsmittenebene (xz-Ebene) beabstandet angeordnet und bildet dort mit seinem Firstabschnitt 307.5 eine Strömungsabrisskante für die Luftströmung.

Der dachartige Vorsprung 307.2 ist derart ausgeprägt gestaltet, dass bei sämtlichen im Normalbetrieb des Fahrzeugs 301 erreichbaren Fahrgeschwindigkeiten v, bei denen durch Seitenwind (beispielsweise im Sinne der eingangs genannten TSI RS) eine kritische Radentlastung auftreten könnte, eine zuverlässige, dauerhafte Ablösung der Strömung von der Außenhaut 302.1 gewährleistet ist, mithin also ein Wiederanlegen der Strömung an die Außenhaut 302.1 (in Strömungsrichtung) hinter dem Vorsprung 307.2 zuverlässig verhindert wird. Hiermit ist es beispielsweise möglich, trotz des vergleichsweise geringen Gewichts des Fahrzeugs 301 die Kriterien an die Seitenwindstabilität, wie sie beispielsweise in der eingangs genannten TSI RS definiert sind, einzuhalten, ohne auf konventionelle Hilfsmittel wie beispielsweise zusätzlichen Ballast oder dergleichen oder eine frühzeitige durch Seitenwind erzwungene Reduktion der Fahrgeschwindigkeit zurückgreifen zu müssen

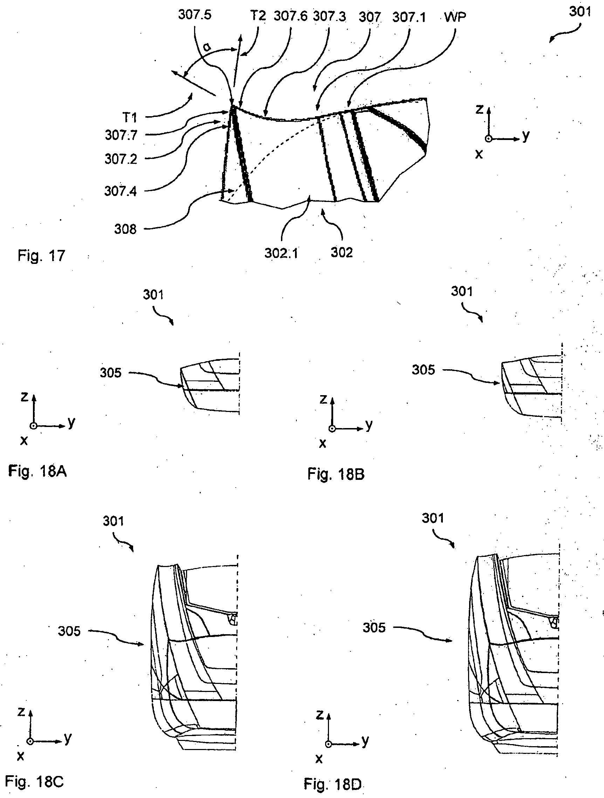

Wie insbesondere den Figuren 16 und 17 zu entnehmen ist, weist der dachartige Vorsprung 307.2 hierzu wiederum einen der Fahrzeuglängsmittenebene (xz-Ebene) zugewandten ersten Dachabschnitt 307.3, einen der Fahrzeuglängsmittenebene abgewandten zweiten Dachabschnitt 307.4 und einen scharfkantigen Firstabschnitt 307.5 (Krümmungsradius 3 mm, maximale Querabmessung weniger als 4 mm) auf, der einen Übergang zwischen dem ersten Dachabschnitt 307.3 und dem zweiten Dachabschnitt 307.4 bildet. Die Schnittkontur des ersten Dachabschnitts 307.3 und des zweiten Dachabschnitts 307.4 ist im vorliegenden Beispiel höchstens sehr schwach gekrümmt, sodass sich eine besonders einfach gestaltete, einfach zu fertigende Geometrie für den Kopfabschnitt 305 in diesem Bereich ergibt.

Um die zuverlässige und dauerhafte Ablösung der Luftströmung bei schräger Anströmung des Wagenkastens 302 zu gewährleisten sind der erste Dachabschnitt 307.3 und der zweite Dachabschnitt 307.4 derart zueinander angeordnet, dass der Luftströmung bei schräger Anströmung des Fahrzeugs 301 durch den ersten Dachabschnitt 307.3 im grenzschichtnahen Bereich der Luftströmung zum einen eine Hauptströmungsrichtung aufgeprägt wird. Zum anderen knickt die Schnittkontur der Außenhaut 302.1 (in einer die Hauptströmungsrichtung enthaltenden Schnittebene) im Bereich des zweiten Dachabschnitts 307.4 (in der Hauptströmungsrichtung nach dem Firstabschnitt 307.5) derart scharf bzw. kliffartig bezüglich der Hauptströmungsrichtung ab, dass die Luftströmung nicht in der Lage ist, dieser rapiden Richtungsänderung der Außenhaut 302.1 zu folgen, und sich demgemäß dauerhaft von der Außenhaut 302.1 ablöst.

Der erste Dachabschnitt 307.3 und der zweite Dachabschnitt 307.4 definieren wiederum eine Tangentialrichtung T1 bzw. eine zweite Tangentialrichtung T2, die ihrerseits einen (zwischen den beiden Dachabschnitten 307.3, 307.4 eingeschlossenen) Dachwinkel $\alpha$ des dachartigen Vorsprungs 307.2 definieren.

Um die oben beschriebene rapide Richtungsänderung der Außenhaut 302.1 und damit die gewünschte dauerhafte Ablösung der Strömung zu erzielen, beträgt der Dachwinkel $\alpha$ über einen ersten Kantenbereich des dachartigen Vorsprungs 307.2, der sich in der Fahrzeuglängsrichtung erstreckt, weniger als 120°, wie dies insbesondere der Kurve 309 aus Figur 6 zu entnehmen ist. Die Kurve 309 aus Figur 6 stellt dabei für das Fahrzeug 301 den Verlauf des Dachwinkels $\alpha$ (in Grad) über die auf die maximale Kopflänge $L_{max}$ des Kopfabschnitts 305 bezogene x-Koordinate (in Prozent) ausgehend von der Fahrzeugspitze (0%) dar.

Wie der Kurve 309 insbesondere zu entnehmen ist, erstreckt sich der erste Kantenbereich von etwa 1 % bis 38% (also über etwa 37%) der maximalen Kopflänge $L_{max}$. In einem zweiten Kantenbereich, der sich von etwa 2% bis 35% (also über etwa 33%) der maximalen Kopflänge $L_{max}$ erstreckt, beträgt der Dachwinkel $\alpha$ weniger als 110°. In einem dritten Kantenbereich, der sich von etwa 3% bis 31% (also über etwa 28%) der maximalen Kopflänge $L_{max}$ erstreckt, beträgt der Dachwinkel $\alpha$ weniger als 100°. In einem vierten Kantenbereich, der sich von etwa 5% bis 28% (also über etwa 22%) der maximalen Kopflänge $L_{max}$ erstreckt, beträgt der Dachwinkel $\alpha$ weniger als 90°. In einem fünften Kantenbereich, der sich von etwa 9% bis 22% (also über etwa 13%) der maximalen Kopflänge $L_{max}$ erstreckt, beträgt der Dachwinkel $\alpha$ weniger als 80°. Der minimale Dachwinkel $\alpha_{min} = 76°$ wird in dem in Figur 16 dargestellten Schnitt erreicht, der bei etwa 18% der maximalen Kopflänge $L_{max}$ liegt.

Die Figuren 18A bis 18D zeigen zur Verdeutlichung der Schnittkonturen der Außenhaut 302.1 Teile der Fahrzeugspitze 301.1, die an den beiden Enden des ersten Kantenbereichs bzw. des zweiten Kantenbereichs freigeschnitten wurden (Figur 18A bei etwa 5% der maximalen Kopflänge $L_{max}$, Figur 18B bei etwa 6% der maximalen Kopflänge $L_{max}$, Figur 18C bei etwa 32% der maximalen Kopflänge $L_{max}$ und Figur 18D bei etwa 37% der maximalen Kopflänge $L_{max}$).

Hinsichtlich der Position des dachartigen Vorsprungs 307.2 in der Fahrzeughöhenrichtung (z-Richtung) ist anzumerken, dass sich der Firstabschnitt 307.5 des ersten Kantenbereichs ausgehend von der Fahrzeugunterkante (0%) von etwa 23% bis 72% (also über etwa 49%) der maximalen Kopfhöhe $H_{max}$ erstreckt, wobei der Firstabschnitt 307.5 zum Rumpfabschnitt 304 hin ansteigt. In dem zweiten Kantenbereich erstreckt sich der Firstabschnitt 307.5 von etwa 25% bis 69% (also über etwa 44%) der maximalen Kopfhöhe $H_{max}$. In dem dritten Kantenbereich erstreckt sich der Firstabschnitt 307.5 von etwa 34% bis 65% (also über etwa 31 %) der maximalen Kopfhöhe $H_{max}$. In dem vierten Kantenbereich erstreckt sich der Firstabschnitt 307.5 von etwa 36% bis 64% (also über etwa 28%) der maximalen Kopfhöhe $H_{max}$. In dem fünften Kantenbereich erstreckt sich der Firstabschnitt 307.5 von etwa 42% bis 55% (also über etwa 13%) der maximalen Kopfhöhe $H_{max}$. Der Punkt des Firstabschnitts 307.5 mit dem minimalen Dachwinkel ($\alpha_{min} = 76°$; siehe Figur 16) liegt bei etwa 50% der maximalen Kopfhöhe $H_{max}$.

Hinsichtlich der Position des dachartigen Vorsprungs 307.2 in der Fahrzeugquerrichtung (y-Richtung) ist anzumerken, dass sich der Firstabschnitt 307.5 des ersten Kantenbereichs ausgehend von der Längsmittenebene (0%) von etwa 28% bis 42% (also über etwa 14%) der maximalen Kopfbreite $B_{max}$ erstreckt, wobei sich der Firstabschnitt 307.5 zum Rumpfabschnitt 304 hin von der Längsmittenebene entfernt. In dem zweiten Kantenbereich erstreckt sich der Firstabschnitt 307.5 von etwa 29% bis 42% (also über etwa 13%) der maximalen Kopfbreite $B_{max}$. In dem dritten Kantenbereich erstreckt sich der Firstabschnitt 307.5 von etwa 36% bis 41,5% (also über etwa 5,5%) der maximalen Kopfbreite $B_{max}$. In dem vierten Kantenbereich erstreckt sich der Firstabschnitt 307.5 von etwa 36,5% bis 41 % (also über etwa 4,5%) der maximalen Kopfbreite $B_{max}$. In dem fünften Kantenbereich erstreckt sich der Firstabschnitt 307.5 von etwa 37,5% bis 39,5% (also über etwa 2%) der maximalen Kopfbreite $B_{max}$. Der Punkt des Firstabschnitts 307.5 mit dem minimalen Dachwinkel ($\alpha_{min} = 76°$; siehe Figur 16) liegt bei etwa 39% der maximalen Kopfbreite $B_{max}$.

Im vorliegenden Beispiel bildet die Außenhaut 302.1 im Bereich der Dachabschnitte 307.3 bzw. 307.4 eine im Wesentlichen glatte Oberfläche (mit in Fahrzeugquerrichtung höchstens moderater Änderung der Krümmung). Die Schnittkontur der Außenhaut 302.1 weist in einer zur Fahrzeuglängsrichtung senkrecht verlaufenden Schnittebene einen Wendepunkt WP auf, wodurch wiederum eine wellenförmige Schnittkontur definiert ist.

Wie den Figuren 16 und 17 weiterhin zu entnehmen ist, ist der dachartige Vorsprung 307.2 auch im vorliegenden Beispiel derart nach Art einer Rampe gestaltet und angeordnet, dass der Luftströmung in seinem Bereich eine starke radial von der Außenhaut 302.1 weg gerichtete Strömungskomponente aufgeprägt wird. Wie Figur 16 zu entnehmen ist, ist die Radialrichtung im Sinne der vorliegenden Erfindung wiederum in einem senkrecht zur Fahrzeuglängsrichtung verlaufenden Fahrzeugquerschnitt durch eine Verbindungslinie R zwischen einem Punkt des Firstabschnitts 307.5 und dem Flächenschwerpunkt A des Fahrzeugquerschnitts definiert. Im vorliegenden Beispiel schließen die erste Tangentialrichtung T1 und die Radialrichtung R über den ersten Kantenbereich einen Winkel $\beta$ von weniger als 45° ein. In dem in Figur 4 dargestellten Schnitt beträgt der Winkel $\beta$ etwa 5°.

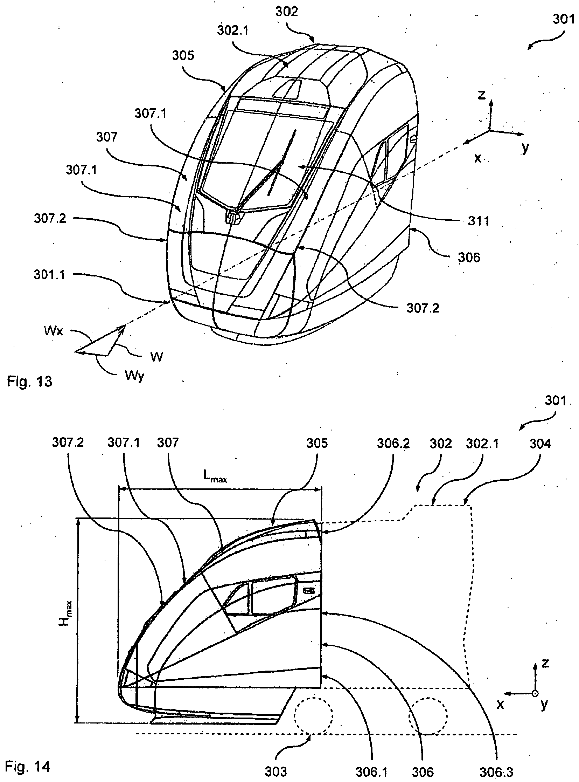

Wie den Figuren 13 und 15 weiterhin zu entnehmen ist, ist der rinnenförmige Abschnitt 307.1 mit dem dachartigen Vorsprung 307.2 in einem (in Fahrzeugquerrichtung) relativ weit außen liegenden Bereich außerhalb einer Frontscheibe 211 des Kopfabschnitts 305 angeordnet, da er sich dort in besonders einfacher Weise realisieren lässt.

Zudem ist diese vergleichsweise weit außen liegende Position im Hinblick auf die einfache Realisierung des dachartigen Vorsprungs 307.2 von Vorteil, da durch die allgemeine Formgebung des Kopfabschnitt 305 in diesem weit außen liegenden Bereich ein entsprechend scharfes bzw. kliffartiges Abknicken der Außenhaut 302.1 bezüglich der Hauptströmungsrichtung begünstigt wird.

Der Verlauf der dachartigen Vorsprünge 307.2 richtet sich nach der allgemeinen Geometrie des Kopfabschnitts 305, um für diesen angepasst ein Optimum hinsichtlich einer reduzierten Seitenwindempfindlichkeit bei geringer Geräuschentwicklung und geringem Fahrwiderstand zu erzielen.

Wie den Figuren 13 und 15 in diesem Zusammenhang weiterhin zu entnehmen ist, verlaufen die Firstabschnitte 307.5 der beiden dachartigen Vorsprünge 307.2 in einer Frontansicht in Richtung der Fahrzeuglängsachse im Wesentlichen V-förmig zueinander, wobei sie eine konvexe V-förmige Gestalt definieren. Hierdurch wird in vorteilhafter Weise eine Annäherung des Verlaufs der Firstabschnitte 307.5 bzw. der dachartigen Vorsprünge 307.2 an den Verlauf der Stromlinien bei rein axialer Anströmung erzielt. Dies ist insoweit von großem Vorteil als hiermit bei rein axialer Anströmung des Wagenkastens 302 durch die dachartigen Vorsprünge 307.2, insbesondere durch deren Firstabschnitte 307.5, keine Störung in die Strömung eingebracht wird, sodass sich bei rein axialer Anströmung bzw. nur schwach hiervon abweichender Anströmung eine möglichst geringe Geräuschentwicklung sowie ein möglichst geringer Fahrwiderstand ergibt.

Im vorliegenden Beispiel folgt der Verlauf der Firstabschnitte 307.5 bzw. der dachartigen Vorsprünge 307.2 hierzu dem Verlauf einer Richtstromlinie. Die Richtstromlinie ist dabei eine im Wesentlichen ungestörte Stromlinie, die sich bei rein in Fahrzeuglängsrichtung erfolgender Anströmung des Wagenkastens 302 ergibt. Bei anderen Varianten der Erfindung kann auch insoweit eine Anpassung an ein herkömmliches Vergleichsfahrzeug mit einer geglätteten kontinuierlich gekrümmten Vergleichsaußenhaut ohne den dachartigen Vorsprung 307.2 aber ansonsten identischer Gestalt erfolgen. Die Richtstromlinie ergibt sich dann bei rein in Fahrzeuglängsrichtung erfolgender Anströmung des Vergleichsfahrzeugs.

Die vorliegende Erfindung wurde vorstehend anhand von drei Fahrzeugtypen für unterschiedliche Geschwindigkeitsklassen bzw. Einsatzzwecke beschrieben, bei denen die dachartigen Vorsprünge unterschiedlich gestaltet sind. Es versteht sich, dass auch innerhalb des jeweiligen Fahrzeugtyps unterschiedliche Gestaltungen der dachartigen Vorsprünge vorgesehen sein können. So zeigt die Kurve 409 aus Figur 6 beispielsweise für ein weiteres Hochgeschwindigkeitsfahrzeug (mit einer Nennbetriebsgeschwindigkeit oberhalb von 350 km/h) den Verlauf des Dachwinkels $\alpha$ (in Grad) über die auf die maximale Kopflänge $L_{max}$ des Kopfabschnitts bezogene x-Koordinate (in Prozent) ausgehend von der Fahrzeugspitze (0%).

Weiterhin versteht es sich, dass die vorliegende Erfindung auch bei Fahrzeugen mit geringerer Nennbetriebsgeschwindigkeit zum Einsatz kommen kann. So kommt die vorliegende Erfindung bevorzugt bei Fahrzeugen beginnend mit einer Nennbetriebsgeschwindigkeit von 140 km/h, vorzugsweise 160 km/h, zum Einsatz.

Die vorliegende Erfindung wurde vorstehend ausschließlich für Beispiele von Fahrzeugen für Triebzüge beschrieben. Es versteht sich jedoch, dass die Erfindung auch im Zusammenhang mit anderen Schienenfahrzeugen zum Einsatz kommen kann. Weiterhin wurde die Erfindung ausschließlich im Zusammenhang mit Schienenfahrzeugen beschrieben. Es versteht sich jedoch, dass sie auch im Zusammenhang mit beliebigen anderen Fahrzeugen zur Erhöhung der Seitenwindstabilität zum Einsatz kommen kann.

**Patentansprüche**

**1.** Fahrzeug, insbesondere Schienenfahrzeug für den Hochgeschwindigkeitsverkehr, mit

- einem Wagenkasten (102; 202; 302), der auf wenigstens einem Fahrwerk (103; 203; 303) abgestützt ist, wobei
- der Wagenkasten (102; 202; 302) eine Fahrzeuglängsrichtung, eine Fahrzeugquerrichtung und eine Fahrzeughöhenrichtung definiert,
- der Wagenkasten (102; 202; 302) einen Rumpfabschnitt (104; 204; 304) und einen daran anschließenden Kopfabschnitt (105; 205; 305) aufweist,
- der Kopfabschnitt (105; 205; 305) dazu ausgebildet ist, im Betrieb ein freies Fahrzeugende (101.1; 201.1; 301.1) zu bilden,
- der Kopfabschnitt (105; 205; 305) sich entlang der Fahrzeuglängsrichtung zum freien Fahrzeugende (101.1; 201.1; 301.1) hin zumindest in der Fahrzeughöhenrichtung verjüngt,
- der Kopfabschnitt (105; 205; 305) eine Außenhaut (102.1; 202.1; 302.1) und eine sich in der Fahrzeuglängsrichtung und/oder der Fahrzeughöhenrichtung erstreckende Strömungsabrisseinrichtung (107; 207; 307) zur Verringerung der Seitenwindempfindlichkeit des Fahrzeugs aufweist,

**dadurch gekennzeichnet, dass**

- die Strömungsabrisseinrichtung (107; 207; 307) einen durch die Außenhaut (102.1; 202.1; 302.1) gebildeten dachartigen Vorsprung (107.2; 207.2; 307.2) umfasst, wobei

- der dachartige Vorsprung (107.2; 207.2; 307.2) in der Fahrzeugquerrichtung von einer Fahrzeuglängsmittenebene beabstandet ist,

- der dachartige Vorsprung (107.2; 207.2; 307.2) einen der Fahrzeuglängsmittenebene zugewandten ersten Dachabschnitt (107.3; 207.3; 307.3), einen der Fahrzeuglängsmittenebene abgewandten zweiten Dachabschnitt (107.4; 207.4; 307.4) und einen Firstabschnitt (107.5; 207.5; 307.5) aufweist, der einen Übergang zwischen dem ersten Dachabschnitt (107.3; 207.3; 307.3) und dem zweiten Dachabschnitt (107.4; 207.4; 307.4) bildet, und

- der erste Dachabschnitt (107.3; 207.3; 307.3) und der zweite Dachabschnitt (107.4; 207.4; 307.4) derart zueinander geneigt verlaufen, dass der Firstabschnitt (107.5; 207.5; 307.5) bei einer Nennbetriebsgeschwindigkeit des Schienenfahrzeugs und einer, insbesondere seitenwindbedingten, schrägen Anströmung des dachartigen Vorsprungs (107.2; 207.2; 307,2) durch einen Luftstrom von der Fahrzeuglängsmittenebene her eine Strömungsabrisskante für den Luftstrom bildet, wobei

- der erste Dachabschnitt (107.3; 207.3; 307.3) in einer senkrecht zur Fahrzeuglängsrichtung verlaufenden Fahrzeugquerebene in einem ersten Anschlussbereich (107.6; 207.6; 307.6) zu dem Firstabschnitt (107.5; 207.5; 307.5) eine erste Tangentialrichtung definiert,

- der zweite Dachabschnitt (107.4; 207.4; 307.4) in der Fahrzeugquerebene in einem zweiten Anschlussbereich (107.7; 207.7; 307.7) zu dem Firstabschnitt (107.5; 207.5; 307.5) eine zweite Tangentialrichtung definiert,

- die erste Tangentialrichtung und die zweite Tangentialrichtung einen Dachwinkel des dachartigen Vorsprungs (107.2; 207.2; 307.2) definieren und

- der Dachwinkel über einen sich in der Fahrzeuglängsrichtung erstreckenden ersten Kantenbereich weniger als 120° beträgt.

2. Fahrzeug nach Anspruch 1, **dadurch gekennzeichnet, dass**

- der erste Dachabschnitt (107.3; 207.3; 307.3) derart ausgebildet ist, dass er in einer senkrecht zur Fahrzeuglängsrichtung verlaufenden Fahrzeugquerebene dem Luftstrom bei einer Anströmung in der Fahrzeugquerrichtung von der Fahrzeuglängsmittenebene her in einem ersten Anschlussbereich (107.6; 207.6; 307.6) zu dem Firstabschnitt (107.5; 207.5; 307.5) eine erste Tangentialrichtung aufprägt, und

- der zweite Dachabschnitt (107.4; 207.4; 307.4) derart ausgebildet ist, dass er in der Fahrzeugquerebene dem Luftstrom bei einer Anströmung in der Fahrzeugquerrichtung zu der Fahrzeuglängsmittenebene hin in einem zweiten Anschlussbereich (107.7; 207.7; 307.7) zu dem Firstabschnitt (107.5; 207.5; 307.5) eine zweite Tangentialrichtung aufprägt, wobei

- die erste Tangentialrichtung und die zweite Tangentialrichtung einen Dachwinkel des dachartigen Vorsprungs (107.2; 207.2; 307.2) definieren und

- der Dachwinkel über einen sich in der Fahrzeuglängsrichtung erstreckenden ersten Kantenbereich weniger als 150° beträgt, vorzugsweise weniger als 120° beträgt, weiter vorzugsweise weniger als 110° beträgt, weiter vorzugsweise weniger als 100° beträgt, insbesondere 70° bis 110° beträgt.

3. Fahrzeug nach Anspruch 1 oder 2, **dadurch gekennzeichnet, dass**

- der Dachwinkel über den ersten Kantenbereich weniger als 110° beträgt, vorzugsweise weniger als 100° beträgt,

und/oder

- der Dachwinkel über den ersten Kantenbereich 70° bis 110° beträgt.

4. Fahrzeug nach einem der Ansprüche 1 bis 3, **dadurch gekennzeichnet, dass**

- der Kopfabschnitt (105; 205; 305) in der Fahrzeuglängsrichtung zwischen dem freien Fahrzeugende (101.1; 201.1; 301.1) und einem Anschlussbereich (106; 206; 306) zu dem Rumpfabschnitt (104; 204; 304) eine maximale Kopflänge aufweist und

- sich der erste Kantenbereich in der Fahrzeuglängsrichtung über wenigstens 15% der maximalen Kopflänge erstreckt, vorzugsweise wenigstens 20% der maximalen Kopflänge erstreckt, weiter vorzugsweise über 25% bis 50% der maximalen Kopflänge erstreckt,

und/oder

- der erste Kantenbereich ausgehend von dem freien Fahrzeugende (101.1; 201.1; 301.1) in der Fahrzeuglängsrichtung in einem ersten relativen Längsabstand beginnt, der mindestens 2% der maximalen Kopflänge beträgt, vorzugsweise mindestens 5% der maximalen Kopflänge beträgt, weiter vorzugsweise mindestens 15% der maximalen Kopflänge beträgt, wobei der erste relative Längsabstand insbesondere mit steigender Nennbetriebsgeschwindigkeit des Schienenfahrzeugs zunimmt,

und/oder

- der erste Kantenbereich ausgehend von dem freien Fahrzeugende (101.1; 201.1; 301.1) in der Fahrzeuglängsrichtung in einem zweiten relativen Längsabstand endet, der höchstens 80% der maximalen Kopflänge beträgt, vorzugsweise höchstens 65% der maximalen Kopflänge beträgt, weiter vorzugsweise höchstens 50% der maximalen Kopflänge beträgt, wobei der zweite relative Längsabstand insbesondere mit steigender Nennbetriebsgeschwindigkeit des Schienenfahrzeugs zunimmt.

**5.** Fahrzeug nach einem der Ansprüche 1 bis 4, **dadurch gekennzeichnet, dass**

- der Kopfabschnitt (105; 205; 305) in der Fahrzeughöhenrichtung zwischen einer Fahrzeugunterkante und einer Fahrzeugoberkante eine maximale Kopfhöhe aufweist und
- sich der erste Kantenbereich in der Fahrzeughöhenrichtung über wenigstens 10% der maximalen Kopfhöhe erstreckt, vorzugsweise wenigstens 30% der maximalen Kopfhöhe erstreckt, weiter vorzugsweise über 25% bis 60% der maximalen Kopfhöhe erstreckt,

und/oder

- der erste Kantenbereich ausgehend von der Fahrzeugunterkante in der Fahrzeughöhenrichtung in einem ersten relativen Höhenabstahd beginnt, der mindestens 15% der maximalen Kopfhöhe beträgt, vorzugsweise mindestens 20% der maximalen Kopfhöhe beträgt; weiter vorzugsweise mindestens 40% der maximalen Kopfhöhe beträgt, wobei der erste relative Höhenabstand insbesondere mit steigender Nennbetriebsgeschwindigkeit des Schienenfahrzeugs zunimmt,

und/oder

- der erste Kantenbereich ausgehend von der Fahrzeugunterkante in der Fahrzeughöhenrichtung in einem zweiten relativen Höhenabstand endet, der höchstens 85% der maximalen Kopfhöhe beträgt, vorzugsweise höchstens 75% der maximalen Kopfhöhe beträgt, weiter vorzugsweise höchstens 65% der maximalen Kopflänge beträgt, wobei der zweite relative Höhenabstand insbesondere mit steigender Nennbetriebsgeschwindigkeit des Schienenfahrzeugs zunimmt.

**6.** Fahrzeug nach einem der Ansprüche 1 bis 5, **dadurch gekennzeichnet, dass**

- der Kopfabschnitt (105; 205; 305) in der Fahrzeugquerrichtung eine maximale Kopfbreite aufweist und
- sich der erste Kantenbereich in der Fahrzeugquerrichtung über wenigstens 10% der maximalen Kopfbreite erstreckt, vorzugsweise wenigstens 15% der maximalen Kopfbreite erstreckt, Weiter vorzugsweise über 10% bis 20% der maximalen Kopfbreite erstreckt,

und/oder

- der erste Kantenbereich ausgehend von der Fahrzeuglängsmittenebene in der Fahrzeugquerrichtung in einem ersten relativen Querabstand beginnt, der mindestens 15% der maximalen Kopfbreite beträgt, vorzugsweise mindestens 20% der maximalen Kopfbreite beträgt, weiter vorzugsweise mindestens 25% der maximalen Kopfbreite beträgt, wobei der erste relative Querabstand insbesondere mit steigender Nennbetriebsgeschwindigkeit des Schienenfahrzeugs abnimmt,

und/oder

- der erste Kantenbereich ausgehend von der Fahrzeuglängsmittenebene in der Fahrzeugquerrichtung in einem zweiten relativen Querabstand endet, der höchstens 30% der maximalen Kopfbreite beträgt, vorzugsweise höchstens 35% der maximalen Kopfbreite beträgt, weiter vorzugsweise höchstens 45% der maximalen Kopfbreite beträgt, wobei der zweite relative Querabstand insbesondere mit steigender Nennbetriebsgeschwindigkeit des Schienenfahrzeugs abnimmt.

7.  Fahrzeug nach einem der Ansprüche 1 bis 6, **dadurch gekennzeichnet, dass**

    - der Firstabschnitt (107.5; 207.5; 307.5) in einer senkrecht zur Fahrzeuglängsrichtung verlaufenden Fahrzeugquerebene im Wesentlichen scharfkantig ausgebildet ist

    und/oder

    - der Firstabschnitt (107.5; 207.5; 307.5) in einer senkrecht zur Fahrzeuglängsrichtung verlaufenden Fahrzeugquerebene zumindest abschnittsweise abgerundet ausgebildet ist, wobei der Krümmungsradius der Firstabschnitts (107.5; 207.5; 307.5) insbesondere höchstens 30 mm beträgt, vorzugsweise höchstens 15 mm beträgt, weiter vorzugsweise höchstens 5 mm beträgt, weiter vorzugsweise höchstens 2 mm beträgt,

    und/oder

    - der Firstabschnitt (107.5; 207.5; 307.5) in einer senkrecht zur Fahrzeuglängsrichtung verlaufenden Fahrzeugquerebene eine maximale Querabmessung aufweist, die höchstens 30 mm beträgt, vorzugsweise höchstens 15 mm beträgt, weiter vorzugsweise höchstens 5 mm beträgt, weiter vorzugsweise höchstens 2 mm beträgt,

8.  Fahrzeug nach einem der Ansprüche 1 bis 7, **dadurch gekennzeichnet, dass**

    - in einem senkrecht zur Fahrzeuglängsrichtung verlaufenden Fahzeugquerschnitt des Wagenkastens eine Verbindungslinie zwischen einem Punkt des Firstabschnitts (107.5; 207.5; 307.5) und dem Flächenschwerpunkt des Fahrzeugquerschnitts eine Radialrichtung definiert, wobei
    - die erste Tangentialrichtung und die Radialrichtung einen Winkel von weniger als 60° einschließen, vorzugsweise einen Winkel von weniger als 45° einschließen, weiter vorzugsweise einen Winkel von weniger als 35° einschließen.

9.  Fahrzeug nach einem der vorhergehenden Ansprüche, **dadurch gekennzeichnet, dass**

    - die Außenhaut (102.1; 202.1; 302.1) des Kopfabschnitts (105; 205; 305) auf Der Fahrzeugoberseite im Bereich des dachartigen Vorsprungs (107.2; 207.2; 307.2) einen rinnenförmigen Abschnitt (107.1; 207.1; 307.1) aufweist, der insbesondere in der Außenhaut (102.1; 202.1; 302.1) des Kopfabschnitts (105; 205; 305) in einem Bereich außerhalb einer Frontscheibe (111; 211; 311) des Kopfabschnitts (105; 205; 305) angeordnet ist, und
    - die Außenhaut (102.1; 202.1; 302.1) in dem rinnenförmigen Abschnitt (107.1; 207.1; 307.1) in einer senkrecht zur Fahrzeuglängsrichtung verlaufenden Fahrzeugquerebene zwischen einem Firstabschnitt (107.5; 207.5; 307.5) dies dachartigen Vorsprungs (107.2; 207.2; 307.2) und der Fahrzeuglängsmittenebene eine Schnittkontur aufweist, die insbesondere

        - im Wesentlichen kontinuierlich gekrümmt ist und einen Wendepunkt aufweist, wobei der Wendepunkt insbesondere näher an dem Firstabschnitt (107.5; 207.5; 307.5) angeordnet ist als an der Fahrzeuglängsmittenebene,

        und/oder

        - einen im Wesentlichen V-förmigen Knick aufweist, wobei der Knick insbesondere näher an dem Firstabschnitt (107.5; 207.5; 307.5) angeordnet ist als an der Fahrzeuglängsmittenebene,

10. Fahrzeug nach Anspruch 9, **dadurch gekennzeichnet, dass**

    - der Kopfabschnitt (105; 205; 305) in der Fahrzeuglängsrichtung zwischen dem freien Fahrzeugende (101.1; 201.1; 301.1) und einem Anschluss (106; 206; 306) zu dem Rumpfabschnitt (104; 204; 304) eine maximale Kopflänge aufweist und
    - sich der rinnenförmige Abschnitt (107.1; 207.1; 307.1) in der Fahrzeuglängsrichtung über wenigstens 30% der maximalen Kopflänge erstreckt, vorzugsweise wenigstens 60% der maximalen Kopflänge erstreckt, weiter vorzugsweise über 30% bis 80% der maximalen Kopflänge erstreckt,

und/oder

- der rinnenförmige Abschnitt (107.1; 207.1; 307.1) ausgehend von dem freien Fahrzeugende (101.1; 201.1; 301.1) in der Fahrzeuglängsrichtung in einem dritten relativen Längsabstand beginnt, der mindestens 2% der maximalen Kopflänge beträgt, vorzugsweise mindestens 5% der maximalen Kopflänge beträgt, weiter vorzugsweise mindestens 15% der maximalen Kopflänge beträgt, wobei der dritte relative Längsabstand insbesondere mit steigender Nennbetriebsgeschwindigkeit des Schienenfahrzeugs zunimmt,

und/oder

- der rinnenförmige Abschnitt (107.1; 207.1; 307.1) ausgehend von dem freien Fahrzeugende (101.1; 201.1; 301.1) in der Fahrzeuglängsrichtung in einem vierten relativen Längsabstand endet, der höchstens 90% der maximalen Kopflänge beträgt, vorzugsweise höchstens 80% der maximalen Kopflänge beträgt, weiter vorzugsweise höchstens 50% der maximalen Kopflänge beträgt, wobei der vierte relative Längsabstand insbesondere mit steigender Nennbetriebsgeschwindigkeit des Schienenfahrzeugs zunimmt.

**11.** Fahrzeug nach Anspruch 8 oder 9, **dadurch gekennzeichnet, dass**

- der Kopfabschnitt (105; 205; 305) in der Fahrzeughöhenrichtung zwischen einer Fahrzeugunterkante und einer Fahrzeugoberkante eine maximale Kopfhöhe aufweist und
- sich der rinnenförmige Abschnitt (107.1; 207.1; 307.1) in der Fahrzeughöhenrichtung über wenigstens 35% der maximalen Kopfhöhe erstreckt, vorzugsweise wenigstens 45% der maximalen Kopfhöhe erstreckt, weiter vorzugsweise über 40% bis 60% der maximalen Kopfhöhe erstreckt,

und/oder

- der rinnenförmige Abschnitt (107.1; 207.1; 307.1) ausgehend von der Fahrzeugünterkante in der Fahrzeughöhenrichtung in einem dritten relativen Höhenabstand beginnt, der mindestens 20% der maximalen Kopfhöhe beträgt, vorzugsweise mindestens 25% der maximalen Kopfhöhe beträgt, weiter vorzugsweise mindestens 30% der maximalen Kopfhöhe beträgt, wobei der dritte relative Höhenabstand insbesondere mit steigender Nennbetriebsgeschwindigkeit des Schienenfahrzeugs zunimmt,

und/oder

- der rinnenförmige Abschnitt (107.1; 207.1: 307.1) ausgehend von der Fahrzeugunterkante in der Fahrzeughöhenrichtung in einem vierten relativen Höhenabstand endet, der höchstens 95% der maximalen Kopfhöhe beträgt, vorzugsweise höchstens 85% der maximalen Kopfhöhe beträgt, weiter vorzugsweise höchstens 70% der maximalen Kopflänge beträgt, wobei der vierte relative Höhenabstand insbesondere mit steigender Nennbetriebsgeschwindigkeit des Schienenfahrzeugs zunimmt.

**12.** Fahrzeug nach einem der Ansprüche 9 bis 11, **dadurch gekennzeichnet, dass**

- der Kopfabschnitts (105; 205; 305) in der Fahrzeugquerrichtung eine maximale Kopfbreite aufweist und
- sich der den rinnenförmigen Abschnitt (107.1; 207.1; 307.1) begrenzende Firstabschnitt (107.5; 207.5; 307.5) in der Fahrzeugquerrichtung über wenigstens 10% der maximalen Kopfbreite erstreckt, vorzugsweise wenigstens 15% der maximalen Kopfbreite erstreckt, weiter vorzugsweise über 10% bis 20% der maximalen Kopfbreite erstreckt,

und/oder

- der den rinnenförmigen Abschnitt (107.1; 207.1; 307.1) begrenzende Firstabschnitt (107.5; 207.5; 307.5) ausgehend von der Fahrzeuglängsmittenebene in der Fahrzeugquerrichtung in einem dritten relativen Querabstand beginnt, der mindestens 15% der maximalen Kopfbreite beträgt, vorzugsweise mindestens 20% der maximalen Kopfbreite beträgt, weiter vorzugsweise mindestens 25% der maximalen Kopfbreite beträgt, wobei der dritte relative Querabstand insbesondere mit steigender Nennbetriebsgeschwindigkeit des Schienenfahrzeugs abnimmt,

und/oder

- der den rinnenförmigen Abschnitt (107.1; 207.1; 307.1) begrenzende Firstabschnitt (107.5; 207.5; 307.5) ausgehend von der Fahrzeuglängsmittenebene in der Fahrzeugquerrichtung in einem vierten relativen Querabstand endet, der höchstens 35% der maximalen Kopfbreite beträgt, vorzugsweise höchstens 40% der maximalen Kopfbreite beträgt, weiter vorzugsweise höchstens 45% der maximalen Kopfbreite beträgt, wobei der vierte relative Querabstand insbesondere mit steigender Nennbetriebsgeschwindigkeit des Schienenfahrzeugs abnimmt.

13. Fahrzeug nach einem der vorhergehenden Ansprüche, **dadurch gekennzeichnet, dass**

- der dachartige Vorsprung (107.2; 207.2; 307.2) ein erster dachartiger Vorsprung (107.2; 207.2; 307.2) ist,
- auf der anderen Seite der Fahrzeuglängsmittenebene an der Außenhaut (102.1; 202.1; 302.1) ein zweiter dachartiger Vorsprung (107.2; 207.2; 307.2) vorgesehen ist und
- der zweite dachartige Vorsprung (107.2; 207.2; 307.2) bezüglich der Fahrzeuglängsmittenebene insbesondere im Wesentlichen symmetrisch zu dem ersten dachartigen Vorsprung (107.2; 207.2; 307.2) ausgebildet ist,

14. Fahrzeug nach Anspruch 13, **dadurch gekennzeichnet, dass**

- der erste dachartige Vorsprung (107.2; 207.2; 307.2) und der zweite dachartige Vorsprung (107.2; 207.2; 307.2) in einer Frontansicht in Richtung der Fahrzeuglängsachse im Wesentlichen V-förmig zueinander verlaufen, wobei
- der erste dachartige Vorsprung (107.2; 207.2; 307.2) und der zweite dachartige Vorsprung (107.2; 207.2; 307.2) in der Frontansicht insbesondere zumindest abschnittsweise eine konvexe V-förmige Gestalt definieren

und/oder

- der erste dachartige Vorsprung (107.2; 207.2; 307.2) und der zweite dachartige Vorsprung (107.2; 207.2; 307.2) in der Frontansicht insbesondere zumindest abschnittsweise eine konkave V-förmige Gestalt definieren.

15. Fahrzeug nach einem der vorhergehenden Ansprüche, **dadurch gekennzeichnet, dass**

- der dachartige Vorsprung (107.2; 207.2; 307.2) derart angeordnet ist, dass er einen an eine Richtstromlinie zumindest angenäherten Verlauf aufweist, insbesondere einer Richtstromlinie im Wesentlichen folgt, wobei
- sich die Richtstromlinie insbesondere bei rein in Fahrzeuglängsrichtung erfolgender Anströmung eines Vergleichsfahrzeugs mit einer geglätteten, insbesondere kontinuierlich gekrümmten Vergleichsaußenhaut ohne den dachartigen Vorsprung (107.2; 207.2; 307.2) aber mit ansonsten identischer Gestalt ergibt.

16. Fahrzeug nach einem der vorhergehenden Ansprüche, **dadurch gekennzeichnet, dass**

- es ein Fahrzeug (101; 201) für den Hochgeschwindigkeitsverkehr mit einer Nennbetriebsgeschwindigkeit von mindestens 250 km/h, insbesondere von mindestens 300 km/h, ist

und/oder

- es ein Doppelstockfahrzeug (301) ist

und/oder

- ein Fahrzeug (101; 201; 301) für einen Triebzug, insbesondere ein Steuerwagen für einen Triebzug, ist.

**Claims**

1. Vehicle, in particular a rail vehicle for high-speed traffic, having

- a wagon body (102; 202; 302) which is supported on at least one running gear (103; 203; 303), wherein
- said wagon body (102; 202; 302) defines a vehicle longitudinal direction, a vehicle transverse direction and a vehicle height direction,
- said wagon body (102; 202; 302) has a body section (104; 204; 304) and an adjacent head section (105; 205; 305),
- said head section (105; 205; 305) is configured to form a free vehicle end (101.1; 201.1; 301.1) during operation,
- said head section (105; 205; 305), along said vehicle longitudinal direction, tapers at least in said vehicle height direction towards said free vehicle end (101.1; 201.1; 301.1),
- said head section (105; 205; 305) has an outer skin (102.1; 202.1; 302.1) and a flow separation unit (107; 207; 307) extending in said vehicle longitudinal direction and/or said vehicle height direction for reducing sensitivity of said vehicle to crosswind,

**characterised in that**

- said flow separation unit (107; 207; 307) comprises a roof-like protrusion (107.2; 207.2; 307.2) formed by said outer skin (102.1; 202.1; 302.1), wherein
- said roof-like protrusion (107.2; 207.2; 307.2), in said vehicle transverse direction, is spaced from a vehicle longitudinal centre plane,
- said roof-like protrusion (107.2; 207.2; 307.2) has a first roof section (107.3; 207.3; 307.3) facing towards said vehicle longitudinal centre plane, a second roof section (107.4; 207.4; 307.4) facing away from said vehicle longitudinal centre plane and a ridge section (107.5; 207.5; 307.5) forming a transition between said first roof section (107.3; 207.3; 307.3) and said second roof section (107.4; 207.4; 307.4), and
- said first roof section (107.3; 207.3; 307.3) and said second roof section (107.4; 207.4; 307.4) run inclined to one another such that, at a nominal operating speed of said rail vehicle and with an oblique flow against said roof-like protrusion (107.2; 207.2; 307.2) by an air flow, in particular caused by crosswind, coming from said vehicle longitudinal centre plane, said ridge section (107.5; 207.5; 307.5) forms a flow separation edge for said air flow, wherein
- said first roof section (107.3; 207.3; 307.3), in a vehicle transverse plane running perpendicular to said vehicle longitudinal direction and in a first region (107.6; 207.6; 307.6) adjacent said ridge section (107.5; 207.5; 307.5), defines a first tangential direction,
- said second roof section (107.4; 207.4; 307.4), in said vehicle transverse plane and in a second region (107.7; 207.7; 307.7) adjacent said ridge section (107.5; 207.5; 307.5), defines a second tangential direction, wherein
- said first tangential direction and said second tangential direction define a roof angle of said roof-like protrusion (107.2; 207.2; 307.2) and
- said roof angle, over a first edge region extending in said vehicle longitudinal direction, is less than 120°.

2. Vehicle according to claim 1, **characterised in that**

- said first roof section (107.3; 207.3; 307.3) is configured to impose, in a vehicle transverse plane running perpendicular to said vehicle longitudinal direction, in a first region (107.6; 207.6; 307.6) adjacent said ridge section (107.5; 207.5; 307.5), and upon a flow in said vehicle transverse direction coming from said vehicle longitudinal centre plane, a first tangential direction on said air flow and
- said second roof section (107.4; 207.4; 307.4) is configured to impose, in said vehicle transverse plane, in a second region (107.7; 207.7; 307.7) adjacent said ridge section (107.5; 207.5; 307.5), and upon a flow in said vehicle transverse direction towards said vehicle longitudinal centre plane, a second tangential direction on said air flow, wherein
- said first tangential direction and said second tangential direction define a roof angle of said roof-like protrusion (107.2; 207.2; 307.2), and
- said roof angle, over a first edge region extending in said vehicle longitudinal direction, is less than 150°, preferably less than 120°, more preferably less than 110°, more preferably less than 100° and, in particular, 70° to 110°.

3. Vehicle according to claim 1 or 2, **characterised in that**

- said roof angle, over said first edge region, is less 110°, preferably less than 100° and/or
- said roof angle, over said first edge region, is 70° to 110°.

4. Vehicle according to one of claims 1 to 3, **characterised in that**

- said head section (105; 205; 305), in said vehicle longitudinal direction, has a maximum head length between said free vehicle end (101.1; 201.1; 301.1) and an interface section (106; 206; 306) to said body section (104; 204; 304), and
- said first edge region, in said vehicle longitudinal direction, extends over at least 15% of said maximum head length, preferably over at least 20% of said maximum head length, and more preferably over 25% to 50% of said maximum head length,

and/or

- said first edge region begins at a first relative longitudinal spacing from said free vehicle end (101.1; 201.1; 301.1) in said vehicle longitudinal direction, which is at least 2% of said maximum head length, preferably at least 5% of said maximum head length, and more preferably at least 15% of said maximum head length, wherein said first relative longitudinal spacing, in particular, increases as said nominal operating speed of said rail vehicle increases,

and/or

- said first edge region ends at a second relative longitudinal spacing from said free vehicle end (101.1; 201.1; 301.1) in said vehicle longitudinal direction, which is at most 80% of said maximum head length, preferably at most 65% of said maximum head length, and more preferably at most 50% of said maximum head length, wherein said second relative longitudinal spacing, in particular, increases as said nominal operating speed of said rail vehicle increases.

5. Vehicle according to one of claims 1 to 4, **characterised in that**

- said head section (105; 205; 305), in said vehicle height direction, has a maximum head height between a vehicle lower edge and a vehicle upper edge and,
- in said vehicle height direction, said first edge region preferably extends over at least 10% of said maximum head height, preferably over at least 30% of said maximum head height, and more preferably over 25% to 60% of said maximum head height,

and/or

- said first edge region begins at a first relative vertical spacing from said vehicle lower edge in said vehicle height direction, which is at least 15% of said maximum head height, preferably at least 20% of said maximum head height, and more preferably at least 40% of said maximum head height, wherein said first relative vertical spacing, in particular, increases as said nominal operating speed of said rail vehicle increases,

and/or

- said first edge region ends at a second relative vertical spacing from said vehicle lower edge in said vehicle height direction, which is at most 85% of said maximum head height, preferably at most 75% of said maximum head height, and more preferably at most 65% of said maximum head length, wherein said second relative vertical spacing, in particular, increases as said nominal operating speed of said rail vehicle increases.

6. Vehicle according to one of claims 1 to 5, **characterised in that**

- said head section (105; 205; 305) has a maximum head width in said vehicle transverse direction and,
- in said vehicle transverse direction, said first edge region extends over at least 10% of said maximum head width, preferably over at least 15% of said maximum head width, and more preferably over 10% to 20% of said maximum head width,

and/or

- said first edge region begins at a first relative transverse spacing from said vehicle longitudinal centre plane in said vehicle transverse direction, which is at least 15% of said maximum head width, preferably at least 20% of said maximum head width, and more preferably at least 25% of said maximum head width, wherein said first relative transverse spacing is in particular reduced as said nominal operating speed of said rail vehicle increases,

and/or

- said first edge region ends at a second relative transverse spacing from said vehicle longitudinal centre plane in said vehicle transverse direction, which is at most 30% of said maximum head width, preferably at most 35% of said maximum head width, and more preferably at most 45% of said maximum head width, wherein said second relative transverse spacing is in particular reduced as said nominal operating speed of said rail vehicle increases.

7. Vehicle according to one of claims 1 to 6, **characterised in that**

- said ridge section (107.5; 207.5; 307.5) is configured to have a substantially sharp edge in a vehicle transverse plane that runs perpendicular to said vehicle longitudinal direction,

and/or

- said ridge section (107.5; 207.5; 307.5) is configured to be at least section wise rounded in a vehicle transverse plane that runs perpendicular to said vehicle longitudinal direction, wherein a radius of curvature of said ridge section (107.5; 207.5; 307.5), in particular, is at most 30 mm, preferably at most 15 mm, more preferably at most 5 mm, and more preferably at most 2 mm,

and/or

- said ridge section (107.5; 207.5; 307.5), in a vehicle transverse plane that runs perpendicular to said vehicle longitudinal direction, has a maximum transverse dimension of at most 30 mm, preferably at most 15 mm, more preferably at most 5 mm, and more preferably at most 2 mm.

8. Vehicle according to one of claims 1 to 7, **characterised in that**,

- in a vehicle cross-section of said wagon body that runs perpendicular to said vehicle longitudinal direction, a line of connection between a point on said ridge section (107.5; 207.5; 307.5) and a centroid of said vehicle cross-section defines a radial direction, wherein
- said first tangential direction and said radial direction form an angle of less than 60°, preferably an angle of less than 45°, and more preferably an angle of less than 35°.

9. Vehicle according to one of the preceding claims, **characterised in that**

- said outer skin (102.1; 202.1; 302.1) of said head section (105; 205; 305), on a vehicle upper side, in the region of said roof-like protrusion (107.2; 207.2; 307.2), has a groove-shaped section (107.1; 207.1; 307.1) which, in particular, is arranged in said outer skin (102.1; 202.1; 302.1) of said head section (105; 205; 305), in a region outside a windscreen (111; 211; 311) of said head section (105; 205; 305), and
- said outer skin (102.1; 202.1; 302.1), in said groove-shaped section (107.1; 207.1; 307.1), in a vehicle transverse plane that runs perpendicular to said vehicle longitudinal direction, between a ridge section (107.5; 207.5; 307.5) of said roof-like protrusion (107.2; 207.2; 307.2) and said vehicle longitudinal centre plane, has a sectional contour that, in particular, is

- substantially continuously curved and has a turning point, wherein said turning point is in particular arranged closer to said ridge section (107.5; 207.5; 307.5) than to said vehicle longitudinal centre plane,

and/or

- has a substantially V-shaped kink, wherein said kink, in particular, is arranged closer to said ridge section (107.5; 207.5; 307.5) than to said vehicle longitudinal centre plane.

10. Vehicle according to claim 9, **characterised in that**

- said head section (105; 205; 305), in said vehicle longitudinal direction, has a maximum head length between said free vehicle end (101.1; 201.1; 301.1) and an interface (106; 206; 306) to said body section (104; 204; 304), and

- said groove-shaped section (107.1; 207.1; 307.1), in said vehicle longitudinal direction, extends over at least 30% of said maximum head length, preferably at least 60% of said maximum head length, more preferably over 30% to 80% of said maximum head length,

and/or

- said groove-shaped section (107.1; 207.1; 307.1) begins at a third relative longitudinal spacing from said free vehicle end (101.1; 201.1; 301.1) in said vehicle longitudinal direction, which is at least 2% of said maximum head length, preferably at least 5% of said maximum head length, more preferably at least 15% of said maximum head length, wherein said third relative longitudinal spacing in particular increases as said nominal operating speed of said rail vehicle increases,

and/or

- said groove-shaped section (107.1; 207.1; 307.1) ends at a fourth relative longitudinal spacing from said free vehicle end (101.1; 201.1; 301.1) in said vehicle longitudinal direction, which is at most 90% of said maximum head length, preferably at most 80% of said maximum head length, more preferably at most 50% of said maximum head length, wherein said fourth relative longitudinal spacing in particular increases as said nominal operating speed of said rail vehicle increases.

11. Vehicle according to claim 8 or 9, **characterised in that**

- said head section (105; 205; 305) has a maximum head height in said vehicle height direction between a vehicle lower edge and a vehicle upper edge, and
- said groove-shaped section (107.1; 207.1; 307.1), in said vehicle height direction, extends over at least 35% of said maximum head height, preferably over at least 45% of said maximum head height, more preferably over 40% to 60% of said maximum head height,

and/or

- said groove-shaped section (107.1; 207.1; 307.1) begins at a third relative vertical spacing from said vehicle lower edge in said vehicle height direction, which is at least 20% of said maximum head height, preferably at least 25% of said maximum head height, more preferably at least 30% of said maximum head height, wherein said third relative vertical spacing in particular increases as said nominal operating speed of said rail vehicle increases,

and/or

- said groove-shaped section (107.1; 207.1; 307.1) ends at a fourth relative vertical spacing from said vehicle lower edge in said vehicle height direction, which is at most 95% of said maximum head height, preferably at most 85% of said maximum vertical height, more preferably at most 70% of said maximum vertical height, wherein said fourth relative vertical spacing in particular increases as said nominal operating speed of said rail vehicle increases.

12. Vehicle according to one of claims 9 to 11, **characterised in that**

- said head section (105; 205; 305) has a maximum head width in said vehicle transverse direction, and
- said ridge section (107.5; 207.5; 307.5) delimiting said groove-shaped section (107.1; 207.1; 307.1), in said vehicle transverse direction, extends over at least 10% of said maximum head width, preferably over at least 15% of said maximum head width, more preferably over 10% to 20% of said maximum head width

and/or

- said ridge section (107.5; 207.5; 307.5) delimiting said groove-shaped section (107.1; 207.1; 307.1) begins at a third relative transverse spacing from said vehicle longitudinal centre plane in said vehicle transverse direction, which is at least 15% of said maximum head width, preferably at least 20% of said maximum head width, more preferably at least 25% of said maximum head width, wherein said third relative transverse spacing is in particular reduced as said nominal operating speed of said rail vehicle increases,

and/or

- said ridge section (107.5; 207.5; 307.5) delimiting said groove-shaped section (107.1; 207.1; 307.1) ends at a fourth relative transverse spacing from said vehicle longitudinal centre plane as seen in said vehicle transverse direction, which is at most 35% of said maximum head width, preferably at most 40% of said maximum head width, more preferably at most 45% of said maximum head width, wherein said fourth relative transverse spacing is in particular reduced as said nominal operating speed of said rail vehicle increases.

13. Vehicle according to one of the preceding claims, **characterised in that**

- said roof-like protrusion (107.2; 207.2; 307.2) is a first roof-like protrusion (107.2; 207.2; 307.2),
- a second roof-like protrusion (107.2; 207.2; 307.2) is provided on said outer skin (102.1; 202.1; 302.1) on an other side of said vehicle longitudinal centre plane, and
- said second roof-like protrusion (107.2; 207.2; 307.2) is configured to be substantially symmetric to said first roof-like protrusion (107.2; 207.2; 307.2) in relation to said vehicle longitudinal centre plane.

14. Vehicle according to claim 13, **characterised in that**

- said first roof-like protrusion (107.2; 207.2; 307.2) and said second roof-like protrusion (107.2; 207.2; 307.2), in a front view in said direction of said vehicle longitudinal axis, run substantially in a V shape in relation to one another, wherein
- said first roof-like protrusion (107.2; 207.2; 307.2) and said second roof-like protrusion (107.2; 207.2; 307.2), in particular, at least section wise, in said front view, define a convex V shape,

and/or

- said first roof-like protrusion (107.2; 207.2; 307.2) and said second roof-like protrusion (107.2; 207.2; 307.2), in particular, at least section wise, in said front view, define a concave V shape.

15. Vehicle according to one of the preceding claims, **characterised in that**

- said roof-like protrusion (107.2; 207.2; 307.2) is arranged such that its course is at least approximated to a guide streamline, and, in particular, substantially follows said guide streamline, wherein
- said guide streamline, in particular, results when there is flow purely in said vehicle longitudinal direction against a reference vehicle having a smoothed and in particular continuously curved reference outer skin without said roof-like protrusion (107,2; 207.2; 307.2) but of otherwise identical shape.

16. Vehicle according to one of the preceding claims, **characterised in that**

- it is a vehicle (101; 201) for high-speed traffic, having a nominal operating speed of at least 250 km/h, in particular at least 300 km/h

and/or

- it is a double-decker vehicle (301),

and/or

- it is a vehicle (101; 201; 301) for a multiple unit train, in particular a control car for a multiple unit train.

**Revendications**

1. Véhicule, notamment un véhicule sur rails pour le trafic à grande vitesse, comportant:

- une caisse (102; 202; 302) qui prend appuis sur au moins un train de roulement (103; 203; 303), dans lequel
- la caisse (102; 202; 302) définit une direction longitudinale du véhicule, une direction transversale du véhicule et une direction en hauteur du véhicule,

- la caisse (102; 202; 302) comporte une partie corps (104; 204; 304) et une partie tête (105; 205; 305) étant adjacente à la partie corps (104; 204; 304),
- la partie tête (105; 205; 305) est configurée de sorte à former une extrémité libre (101.1; 201.1; 301.1) du véhicule lors du service,
- la partie tête (105; 205; 305) s'amincit, au moins dans la direction en hauteur du véhicule, le long de la direction longitudinale du véhicule vers l'extrémité libre (101.1; 201.1; 301.1) du véhicule,
- la partie tête (105; 205; 305) comporte une enveloppe extérieure (102.1; 202.1; 302.1) et un dispositif de décollement du courant d'air (107; 207; 307) s'étendant en direction longitudinale du véhicule et/ou dans la direction en hauteur du véhicule pour diminuer la sensibilité aux vents latéraux du véhicule sur rails,

**caractérisé en ce que**

- le dispositif de décollement du courant d'air (107; 207; 307) comprend une saillie (107.2; 207.2; 307.2) en forme de toit, formée par l'enveloppe extérieure (102.1; 202.1; 302.1), dans lequel
- la saillie en forme de toit (107.2; 207.2; 307.2) est située, en direction transversale du véhicule, à distance d'un plan médian longitudinal du véhicule,
- la saillie en forme de toit (107.2; 207.2; 307.2) comporte une première partie de toit (107.3; 207.3; 307.3), tournée vers le plan médian longitudinal du véhicule, une seconde partie de toit (107.4; 207.4; 307.4) détournée du plan médian longitudinal du véhicule ainsi qu'une partie crête (107.5; 207.5; 307.5) formant la transition entre la première partie de toit (107.3; 207.3; 307.3) et la seconde partie de toit (107.4; 207.4; 307.4), et
- la première partie de toit (107.3; 207.3; 307.3) et la seconde partie de toit (107.4; 207.4; 307.4) sont inclinées l'une par rapport à l'autre de telle sorte que, lors d'une vitesse de service nominale du véhicule sur rails et en présence d'un courant d'air affluant obliquement vers la saillie (107.2; 207.2; 307.2) en forme de toit à partir du plan médian longitudinal du véhicule, en particulier sous l'effet de vent latéral, la partie crête (107.5; 207.5; 307.5) forme une arête de décollement du courant d'air, dans lequel
- la première partie de toit (107.3; 207.3; 307.3), dans un plan transversal du véhicule étant perpendiculaire à la direction longitudinale du véhicule, définit, dans une première zone adjacente (107.6; 207.6; 307.6) à la partie crête (107.5; 207.5; 307.5), une première direction tangentielle
- la seconde partie de toit (107.4; 207.4; 307.4), dans le plan transversal du véhicule, définit, dans une seconde zone adjacente (107.7; 207.7; 307.7) à la partie crête (107.5; 207.5; 307.5), une seconde direction tangentielle, dans lequel
- la première direction tangentielle et la seconde direction tangentielle définissent un angle de toit de la saillie en forme de toit (107.2; 207.2; 307.2) et
- l'angle de toit, dans une première zone de crête s'étendant en direction longitudinale du véhicule, est inférieur à 120°.

2. Véhicule selon la revendication 1, **caractérisé en ce que**

- la première partie de toit (107.3; 207.3; 307.3) est formée de telle sorte qu'elle confère, dans un plan transversal du véhicule étant perpendiculaire à la direction longitudinale du véhicule, au courant d'air affluant en direction transversale du véhicule à partir du plan médian longitudinal du véhicule, dans une première zone adjacente (107.6; 207.6; 307.6) à la partie crête (107.5; 207.5; 307.5), une première direction tangentielle, et
- la seconde partie de toit (107.4; 207.4; 307.4) est formée de telle sorte qu'elle confère, dans le plan transversal du véhicule, au courant d'air affluant en direction transversale du véhicule vers le plan médian longitudinal du véhicule, dans une seconde zone adjacente (107.7; 207.7; 307.7) à la partie crête (107.5; 207.5; 307.5), une seconde direction tangentielle, dans lequel
- la première direction tangentielle et la seconde direction tangentielle définissent un angle de toit de la saillie en forme de toit (107.2; 207.2; 307.2) et
- l'angle de toit, dans une première zone de crête s'étendant en direction longitudinale du véhicule, est inférieur à 150°, de préférence inférieur à 120°, mieux encore inférieur à 110°, mieux encore inférieur à 100°, notamment de 70° à 110°.

3. Véhicule selon la revendication 1 ou 2, **caractérisé en ce que**

- l'angle de toit, dans la première zone de crête, est inférieur à 110°, mieux encore inférieur à 100°,

et/ou

- l'angle de toit, dans la première zone de crête, est de 70° à 110°.

4.  Véhicule selon une des revendications 1 à 3, **caractérisé en ce que**

     - la partie tête (105; 205; 305), en direction longitudinale du véhicule, a une longueur de tête maximale entre l'extrémité libre (101.1; 201.1; 301.1) du véhicule et une zone interface (106; 206; 306) à la partie corps (104; 204; 304) et
     - la première zone de crête s'étend, en direction longitudinale du véhicule, sur au moins 15% de la longueur de tête maximale, de préférence sur au moins 20% de la longueur de tête maximale, mieux encore de 25% à 50% de la longueur de tête maximale,

     et/ou

     - la première zone de crête, partant de l'extrémité libre (101.1; 201.1; 301.1) du véhicule en direction longitudinale du véhicule, commence dans un premier écartement longitudinal relatif qui est au moins 2% de la longueur de tête maximale, de préférence au moins 5% de la longueur de tête maximale, mieux encore au moins 15% de la longueur de tête maximale, le premier écartement longitudinal relatif notamment augmentant avec une vitesse de service nominale du véhicule sur rails croissante,

     et/ou

     - la première zone de crête, partant de l'extrémité libre (101.1; 201.1; 301.1) du véhicule en direction longitudinale du véhicule, se termine dans un deuxième écartement longitudinal relatif qui est au maximum 80% de la longueur de tête maximale, de préférence au maximum 65% de la longueur de tête maximale, mieux encore au maximum 50% de la longueur de tête maximale, le deuxième écartement longitudinal relatif notamment augmentant,avec une vitesse de service nominale du véhicule sur rails croissante.

5.  Véhicule selon une des revendications de 1 à 4, **caractérisé en ce que**

     - la partie tête (105; 205; 305), dans la direction en hauteur du véhicule, a une hauteur de tête maximale entre un bord inférieur et un bord supérieur du véhicule et
     - la première zone de crête s'étend, dans la direction en hauteur du véhicule, sur au moins 10% de la hauteur de tête maximale, de préférence sur au moins 30% de la hauteur de tête maximale, mieux encore de 25% à 60% de la hauteur de tête maximale,

     et/ou

     - la première zone de crête, partant du bord inférieur du véhicule dans la direction en hauteur du véhicule, commence dans un premier écartement en hauteur relatif qui est au moins 15% de la hauteur de tête maximale, de préférence au moins 20% de la hauteur de tête maximale, mieux encore au moins 40% de la hauteur de tête maximale, le premier écartement en hauteur relatif augmentant notamment avec une vitesse de service nominale du véhicule sur rails croissante,

     et/ou

     - la première zone de crête, partant du bord inférieur du véhicule dans la direction en hauteur du véhicule, se termine dans un deuxième écartement en hauteur relatif qui est au maximum 85% de la hauteur de tête maximale, de préférence au maximum 75% de la hauteur de tête maximale, mieux encore au maximum 65% de la hauteur de tête maximale, le deuxième écartement en hauteur relatif augmentant notamment avec une vitesse de service nominale du véhicule sur rails croissante.

6.  Véhicule selon une des revendications de 1 à 5, **caractérisé en ce que**

     - la partie tête (105; 205; 305) a une largeur de tête maximale en direction transversale du véhicule et
     - la première zone de crête s'étend, dans la direction transversale du véhicule, sur au moins 10% de la largeur de tête maximale, de préférence sur au moins 15% de la largeur de tête maximale, mieux encore de 10% à 20% de la largeur de tête maximale,

et/ou

- la première zone de crête, partant du plan médian longitudinal du véhicule en direction transversale du véhicule, commence dans un premier écartement transversal relatif qui est au moins 15% de la largeur de tête maximale, de préférence au moins 20% de la largeur de tête maximale, mieux encore au moins 25% de la largeur de tête maximale, le premier écartement transversal relatif diminuant notamment avec une vitesse de service nominale du véhicule sur rails croissante,

et/ou

- la première zone de crête, partant du plan médian longitudinal du véhicule en direction transversale du véhicule, se termine dans un deuxième écartement transversal relatif qui est au moins 30% de la largeur de tête maximale, de préférence au moins 35% de la largeur de tête maximale, mieux encore au moins 45% de la largeur de tête maximale, le deuxième écartement transversal relatif diminuant notamment avec une vitesse de service nominale du véhicule sur rails croissante.

7. Véhicule selon une des revendications de 1 à 6, **caractérisé en ce que**

- la partie crête (107.5; 207.5; 307.5), dans un plan transversal du véhicule étant perpendiculaire à la direction longitudinale du véhicule, est formée essentiellement sous forme de crête vive,

et/ou

- la partie crête (107.5; 207.5; 307.5) est formée de sorte à être au moins partiellement arrondie dans un plan transversal du véhicule étant perpendiculaire à la direction longitudinale du véhicule, le rayon de courbure de la partie crête (107.5; 207.5; 307.5) notamment étant au maximum 30 mm, de préférence au maximum 15 mm, mieux encore au maximum 5 mm, mieux encore au maximum 2 mm,

et/ou

- la partie crête (107.5; 207.5; 307.5), dans un plan transversal du véhicule étant perpendiculaire à la direction longitudinale du véhicule, a une dimension transversale maximale qui est au maximum 30 mm, de préférence au maximum 15 mm, mieux encore au maximum 5 mm, mieux encore au maximum 2 mm.

8. Véhicule selon une des revendications de 1 à 7, **caractérisé en ce que**,

- dans une section transversale de la caisse étant perpendiculaire à la direction longitudinale du véhicule, une ligne de liaison entre un point de la partie crête (107.5; 207.5; 307.5) et le centre de gravité de la surface de la section transversale du véhicule définit une direction radiale,
- la première direction tangentielle et la direction radiale formant un angle inférieur à 60°, de préférence un angle inférieur à 45°, mieux encore un angle inférieur à 35°.

9. Véhicule selon une des revendications précédentes, **caractérisé en ce que**

- l'enveloppe extérieure (102.1; 202.1; 302.1) de la partie tête (105; 205; 305), sur un côté supérieur du véhicule, dans la zone de la saillie en forme de toit (107.2; 207.2; 307.2), comporte une section en forme de gorge (107.1; 207.1; 307.1) qui est notamment agencée dans l'enveloppe extérieure (102.1; 202.1; 302.1) de la partie tête (105; 205; 305) dans une zone à l'extérieur d'une vitre frontale (111; 211; 311) de la partie tête, et
- l'enveloppe extérieure (102.1; 202.1; 302.1), dans la section en forme de gorge (107.1; 207.1; 307.1), comporte, dans un plan transversal du véhicule étant perpendiculaire à la direction longitudinale du véhicule, entre un partie crête (107.5; 207.5; 307.5) de la saillie en forme de toit (107.2; 207.2; 307.2) et un plan médian longitudinal du véhicule, un contour de coupe qui, notamment,

- est essentiellement continuellement incurvé et qui présente un point d'inflexion, le point d'inflexion notamment étant agencé plus proche de la partie crête (107.5; 207.5; 307.5) que du plan médian longitudinal du véhicule,

et/ou

- présente un pli notamment en forme de V, le pli notamment étant agencé plus proche de la partie crête (107.5; 207.5; 307.5) que du plan médian longitudinal du véhicule.

**10.** Véhicule selon la revendication 9, **caractérisé en ce que**

- la partie tête (105; 205; 305) présente, en direction longitudinale du véhicule, entre l'extrémité libre du véhicule (101.1; 201.1; 301.1) et un interface (106; 206; 306) à la partie corps (104; 204; 304), une longueur de tête maximale et
- la section en forme de gorge (107.1; 207.1; 307.1) s'étend, en direction longitudinale du véhicule, sur au moins 30% de la longueur de tête maximale, de préférence sur au moins 60% de la longueur de tête maximale, mieux encore sur au moins de 30% à 80% de la longueur de tête maximale,

et/ou

- la section en forme de gorge (107.1; 207.1; 307.1) commence, en partant de l'extrémité libre du véhicule (101.1; 201.1; 301.1) en direction longitudinale du véhicule, dans un troisième écartement longitudinal relatif qui est au moins 2% de la longueur de tête maximale, de préférence au moins 5% de la longueur de tête maximale, mieux encore au moins 15% de la longueur de tête maximale, le troisième écartement longitudinal relatif augmentant notamment avec une vitesse de service nominale du véhicule sur rails croissante,

et/ou

- la section en forme de gorge (107.1; 207.1; 307.1) se termine, en partant de l'extrémité libre du véhicule (101.1; 201.1; 301.1) en direction longitudinale du véhicule, dans un quatrième écartement longitudinal relatif qui est au maximum 90% de la longueur de tête maximale, de préférence au maximum 80% de la longueur de tête maximale, mieux encore au maximum 50% de la longueur de tête maximale, le quatrième écartement longitudinal relatif augmentant notamment avec une vitesse de service nominale du véhicule sur rails croissante.

**11.** Véhicule selon la revendication 8 ou 9, **caractérisé en ce que**

- la partie tête (105; 205; 305) présente, dans la direction en hauteur du véhicule, entre un bord inférieur du véhicule et un bord supérieur du véhicule, une hauteur de tête maximale et
- la section en forme de gorge (107.1; 207.1; 307.1) s'étend, dans la direction en hauteur du véhicule, sur au moins 35% de la hauteur de tête maximale, de préférence sur au moins 45% de la hauteur de tête maximale, mieux encore sur au moins de 40% à 60% de la hauteur de tête maximale,

et/ou

- la section en forme de gorge (107.1; 207.1; 307.1) commence, en partant du bord inférieur du véhicule dans la direction en hauteur du véhicule, dans un troisième écartement en hauteur relatif qui est au moins 20% de la hauteur de tête maximale, de préférence au moins 25% de la hauteur de tête maximale, mieux encore au moins 30% de la hauteur de tête maximale, le troisième écartement en hauteur relatif augmentant notamment avec une vitesse de service nominale du véhicule sur rails croissante,

et/ou

- la section en forme de gorge (107.1; 207.1; 307.1) se termine, en partant du bord inférieur du véhicule dans la direction en hauteur du véhicule, dans un quatrième écartement en hauteur relatif qui est au maximum 95% de la hauteur de tête maximale, de préférence au maximum 85% de la hauteur de tête maximale, mieux encore au maximum 70% de la hauteur de tête maximale, le quatrième écartement en hauteur relatif augmentant notamment avec une vitesse de service nominale du véhicule sur rails croissante.

**12.** Véhicule selon une des revendications de 9 à 11, **caractérisé en ce que**

- la partie tête (105; 205; 305) présente, en direction transversale du véhicule, une largeur de tête maximale et
- la partie crête (107.5; 207.5; 307.5) délimitant la section en forme de gorge (107.1; 207.1; 307.1) s'étend, en direction transversale du véhicule, sur au moins 10% de la largeur de tête maximale, de préférence sur au moins 15% de la largeur de tête maximale, mieux encore sur au moins de 10% à 20% de la largeur de tête maximale,

et/ou

- la partie crête (107.5; 207.5; 307.5) délimitant la section en forme de gorge (107.1; 207.1; 307.1) commence, en partant du plan médian longitudinal du véhicule en direction transversale du véhicule, dans un troisième écartement transversal relatif qui est au moins 15% de la largeur de tête maximale, de préférence au moins 20% de la largeur de tête maximale, mieux encore au moins 25% de la largeur de tête maximale, le troisième écartement transversal relatif diminuant notamment avec une vitesse de service nominale du véhicule sur rails croissante,

et/ou

- la partie crête (107.5; 207.5; 307.5) délimitant la section en forme de gorge (107.1; 207.1; 307.1) se termine, en partant du plan médian longitudinal du véhicule en direction transversale du véhicule, dans un quatrième écartement transversal relatif qui est au maximum 35% de la largeur de tête maximale, de préférence au maximum 40% de la largeur de tête maximale, mieux encore au maximum 45% de la largeur de tête maximale, le quatrième écartement transversal relatif diminuant notamment lors d'une vitesse de service nominale du véhicule sur rails croissante.

13. Véhicule conformément à une des revendications précédentes, **caractérisé en ce que**

- la saillie en forme de toit (107.2; 207.2; 307.2) est une première saillie en forme de toit (107.2; 207.2; 307.2),
- l'on prévoit une seconde saillie en forme de toit (107.2; 207.2; 307.2) sur l'autre côté du plan médian longitudinal du véhicule au niveau de l'enveloppe extérieure (102.1; 202.1; 302.1) et
- la seconde saillie en forme de toit (107.2; 207.2; 307.2) est notamment formée de manière essentiellement symétrique à la première saillie en forme de toit (107.2; 207.2; 307.2) par rapport au plan médian longitudinal du véhicule,

14. Véhicule conformément à la revendication 13, **caractérisé en ce que**

- la première saillie en forme de toit (107.2; 207.2; 307.2) et la seconde saillie en forme de toit (107.2; 207.2; 307.2), dans une vue de front en direction de l'axe longitudinal du véhicule, s'étendent, l'une par rapport à l'autre, essentiellement en forme de V,
- la première saillie en forme de toit (107.2; 207.2; 307.2) et la seconde saillie en forme de toit (107.2; 207.2; 307.2) notamment définissant, dans la vue de front, une configuration qui est, au mois en sections, en forme de V convexe,

et/ou

- la première saillie en forme de toit (107.2; 207.2; 307.2) et la seconde saillie en forme de toit (107.2; 207.2; 307.2) notamment définissant, dans la vue de front, une configuration qui est, au mois en sections, en forme de V concave.

15. Véhicule selon une des revendications précédentes, **caractérisé en ce que**

- la saillie en forme de toit (107.2; 207.2; 307.2) est agencée de telle sorte qu'elle présente un cours au moins proche à une ligne de courant de dressage, notamment elle suit essentiellement une ligne de courant de dressage,
- la ligne de courant de dressage se produisant notamment lors d'un courant d'air affluant exclusivement en direction longitudinale du véhicule sur un véhicule de référence ayant une enveloppe extérieure de référence lissée, notamment à courbure continue, sans la saillie en forme de toit (107.2; 207.2; 307.2) mais autrement de configuration identique.

16. Véhicule conformément à une des revendications précédentes, **caractérisé en ce que**

- il s'agit d'un véhicule (101; 201) pour le trafic à grande vitesse avec une vitesse de service nominale du véhicule d'au moins 250 km/h, notamment d'au moins 300 km/h,

et/ou

- il s'agit d'un véhicule à deux étages (301),

et/ou

- il s'agit d'un véhicule (101; 201; 301) pour un train automoteur, notamment d'une voiture-pilote pour un train automoteur.

Fig. 1

Fig. 2

33

B_max

107

105

107.2

107.1

IV

107.2

107.1

H_max

102

102.1

z

y

x

**Fig. 3**

R    107.5    T2 107.3    107    107.1    WP

α

T1

β

107.2

107.4

108

102.1

102·

V

A

**Fig. 4**

101

101

Fig. 5

Fig. 6

Fig. 7

Fig. 8

Fig. 9

Fig. 10

Fig. 11

Fig. 12A

Fig. 12B

Fig. 12C

Fig. 12D

Fig. 13

Fig. 14

B_max

307.2

307.1

H_max

302

302.1

307

305

307.2

307.1

301

z
x
y

Fig. 15

R  307.5      T2 307.3  307  307.1      WP

T1

307.2

307.4

308

302.1

302

XVII

A

301

z
x
y

Fig. 16

40

Fig. 17

Fig. 18A

Fig. 18B

Fig. 18C

Fig. 18D

**EP 2 383 161 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2554488 C3